**Europäisches Patentamt**

**European Patent Office**

**Office européen des brevets**

(19)

(11) Veröffentlichungsnummer : **0 324 410 B1**

(12)

# EUROPÄISCHE PATENTSCHRIFT

(45) Veröffentlichungstag der Patentschrift :
**27.05.92 Patentblatt 92/22**

(51) Int. Cl.⁵ : **F16L 3/18,** F16L 3/00,
F16L 27/12

(21) Anmeldenummer : **89100279.2**

(22) Anmeldetag : **09.01.89**

(54) **System zur Festlegung von Rohrleitungen aus Stahl.**

(30) Priorität : **09.01.88 DE 3800390**
**17.03.88 DE 8803596 U**

(43) Veröffentlichungstag der Anmeldung :
**19.07.89 Patentblatt 89/29**

(45) Bekanntmachung des Hinweises auf die
Patenterteilung :
**27.05.92 Patentblatt 92/22**

(84) Benannte Vertragsstaaten :
**CH DE FR LI NL**

(56) Entgegenhaltungen :
**DD-A- 246 815**

(56) Entgegenhaltungen :
**DE-A- 2 535 870**
**DE-A- 3 241 058**
**DE-A- 3 413 747**
**DE-A- 3 534 965**
**US-A- 4 315 528**

(73) Patentinhaber : **Bernecker, Klaus-Dieter**
**Stieglitzweg 2**
**W-5828 Ennepetal (DE)**

(72) Erfinder : **Bernecker, Klaus-Dieter**
**Stieglitzweg 2**
**W-5828 Ennepetal (DE)**

(74) Vertreter : **Patentanwälte Wenzel & Kalkoff**
**Flasskuhle 6 Postfach 2448**
**W-5810 Witten (DE)**

EP 0 324 410 B1

Jouve, 18, rue Saint-Denis, 75001 PARIS

EP 0 324 410 B1

## Beschreibung

Die Erfindung betrifft ein System zur Festlegung von Rohrleitungen aus Stahl oder Edelstahl sowie anderen zur Herstellung von Rohrleitungen geeigneten Werkstoffen, wobei es sich um hochbelastbare Rohrleitungssysteme z.B. in Kraftwerken oder in chemischen Anlagen handelt.

Rohrleitungen der hier betroffenen Art, die mit einem Nenndurchmesser bis 1000 mm und mehr sowohl normalwandig als auch dickwandig sowie insbesondere aus Stahl hergestellt werden, unterliegen je nach Betriebsbedingungen hohen und höchsten physikalischen Belastungen, von denen im vorliegenden Fall insbesondere die thermischen Einflüsse und die hierdurch hervorgerufenen Wärmedehnungen und Wärmespannungen von Interesse sind. Denn die Dehnungen, insbesondere solche in axialer Richtung, verursachen hohe Schubkräfte, die die Rohrleitung zu verschieben trachten. Es müssen deshalb sogenannte Festpunkte angelegt werden, an und mit denen die Rohrleitungen an vorbestimmten Stellen festgelegt wird. An den Festpunkten müssen jedoch nicht nur die Schubkräfte aufgrund von Wärmedehnungen in axialer Richtung aufgenommen werden, sondern auch in andere Richtungen wirksame Schubkräfte oder Schwingungen oder Stoßkräfte oder beispielsweise solche Belastungen, die eine Drehwirkung auf die Rohrleitung ausüben, müssen aufgefangen bzw. ausgeglichen werden, so daß sich die Rohrleitung nicht als Ganzes verschieben oder verdrehen kann.

Die aufzunehmenden Schubkräfte können bei Rohrleitungssystemen mit einem Außendurchmesser von etwa 140 mm ohne weiteres in der Größenordnung von 40 to liegen. Entsprechend stark -dimensioniert sind die Festpunkte auszubilden, die Kräfte dieser Größenordnung aufzunehmen haben.

Zur Ausbildung von Festpunkten werden an den Rohren, die für eine Festpunktausbildung vorgesehen sind, in der Werkstatt oder auf der Baustelle in einer Radialebene gelegene Nocken am äußeren Rohrmantel angeschweißt. Die Nocken bilden auf einer Seite Anschläge, mit denen das Rohr axial festlegbar ist, indem die Anschläge mit einer feststehenden Platte, die stationär verankert ist, in Eingriff kommen.

Obwohl die Schweißarbeiten beim Aufschweißen der Nocken mit größter Sorgfalt sowie mit entsprechenden Werkstattschweißvorrichtungen ausgeführt werden, kommt es in der Praxis immer wieder vor, daß Nocken beim Auftreten von-Spitzenwerten der Schubkräfte. abbrechen oder sich verformen, so daß der Festpunkt nicht mehr funktionssicher ist und repariert werden muß. Reparaturarbeiten dieser Art lassen sich insbesondere mit der erforderlichen Sorgfalt selten so an Ort und Stelle ausführen, daß die Schweißverbindung des Nockens mit dem betreffenden Rohr die verlangte Festigkeit und Sicherheit aufweist. Ein Ausbau des Rohrs zwecks Reparatur in der Werkstatt oder vor Ort verursacht hohe Kosten und eine entsprechende Stillstandszeit der Anlage.

Aus der DE-A-3413747 geht eine Festpunktkonstruktion für eine Rohrleitung hervor, bei der statt Nocken kranzförmig an der Mantelfläche der Rohrleitung aufgeschweißte Längsrippen, nämlich in Längsrichtung der Rohrleitung aufgeschweißte Rippen, die rohrleitungsseitige Befestigung der Bauelemente des Festpunktes bilden. Zwei solcher Kränze aus aufgeschweißten Längsrippen liegen sich im bestand gegenüber und tragen jeweils an den Längsrippen angeschweißte Ringflansche, die einen Metallring zwischen sich halten. In eine ringsumlaufende Nut dieses Ringes ist ein Spannring eingelegt, der sich in einer Innennut eines Außenringes abstützt, der in ein die Rohrleitung umgebendes Außenrohr eingeschweißt ist. Im Falle von Längendehnungen der Rohrleitung übernehmen die auf den Rohrleitungsmantel aufgeschweißten Längsrippen und damit deren Schweißnähte die Axialkräfte, die zwischen dem in das Außenrohr eingeschweißten Außenring und der Rohrleitung entstehen. Insofern gilt für diese Konstruktion das vorstehend mit Bezug auf an den äußeren Rohrmantel angeschweißte Nocken Gesagte.

Es kommt auch immer wieder vor, daß Festpunkte entweder falsch berechnet oder auch unsachgemäß ausgeführt sind, so daß nachträglich während der Leitungsmontage Schweißarbeiten an der Baustelle erforderlich werden. Es versteht sich von selbst, daß die Herstellung von Schweißverbindungen hoher Festigkeit und Qualität hohe Kosten verursachen. So müssen beispielsweise warmfeste Werkstoffe wie 13 Cr Mo 44 vor dem Schweißen erwärmt und anschließend spannungsfrei geglüht werden.

Darüber hinaus ist auch die Festpunktkonstruktion weitgehend dem individuellen Entwurf des jeweiligen Konstrukteurs überlassen, so daß der Fachmann nicht etwa auf ein einheitliches System zurückgreifen kann, das unter Berücksichtigung der anstehenden Rohrleitungsabmessungen und der von der Leitung aufzunehmenden Belastung die Gestaltung des Festpunktes weitgehend vorgibt und einheitliche Berechnungsgrundlagen zuläßt.

Es besteht daher die Aufgabe, ein universell anwendbares, höchsten Sicherheitsanforderungen entsprechendes System zur Ausbildung von Festpunkten für Rohrleitungen zu entwickeln, wobei die Festpunkte nach Art eines Baukastensystems mit - jedenfalls relativ gesehen - geringem Kostenaufwand herstellbar und einheitlich berechenbar sind.

Erfindungsgemäß wird diese Aufgabe dadurch gelöst, daß

a) zur Ausbildung eines Festpunktes ein Zwischenrohrstück mit einem Widerlager vorgesehen ist,

b) das Zwischenrohrstück an seinen Enden zum Einfügen in die Rohrleitung ausgebildet z.B. abgestuft ist,

c) das Zwischenrohrstück im Bereich seiner Mantelfläche mindestens eine insbesondere axiale Schubkräfte übertragende Druckfläche an einem einteilig mit dem Rohrkörper des Zwischenrohrstück ausgebildeten oder formschlüssig am Rohrkörper befestigten Wulst oder an einer Ausnehmung in dem genannten Rohrkörper aufweist,

d) das Widerlager für ein Zusammenwirken mit dem Zwischenrohrstück mit mindestens einer Gegenfläche versehen ist, die für einen formschlüssigen Eingriff mit der Druckfläche des Zwischenrohrstücks ausgebildet ist

e) und das Widerlager eine Verbindungsvorrichtung zum Befestigen desselben an einer Verankerung aufweist.

Mit diesem System, das mindesten das Zwischenrohrstück und das Widerlager umfaßt, läßt sich praktisch jede Aufgabe der Ausbildung eines Festpunktes in optimaler Weise lösen. Denn für jede Nenngröße, aber auch für Zwischengrößen, werden entsprechende Zwischenrohrstücke vorgesehen, die an den Stellen der Rohrleitung, wo Festpunkte einzurichten sind, eingefügt werden. Hierfür ist jedes Zwischenrohrstück an seinen Enden so ausgebildet wie jeder normale Rohrschuß z.B. abgestuft. Deshalb ist beim Einfügen des Zwischenrohrstücks die gleiche Verbindungsarbeit zu leisten wie bei jedem Rohrschuß. Das Zwischenrohrstück, an dem mindestens eine Druckfläche ausgebildet ist, ist in vorbestimmter Weise mit dem Widerlager, das eine Gegenfläche für die Druckfläche aufweist zu verbinden, so daß sich für jeden Einzelfall der Ausbildung eines Festpunktes sehr gut vorausberechenbare Verhältnisse ergeben, die höchste Sicherheit gewährleisten. Grundsätzlich wird eine kurze Baulänge des Zwischenrohrstücks bevorzugt, was nicht ausschließt, daß bei Bedarf auch übliche Rohrschußlängen verwendet werden.

Die an dem Zwischenrohrstück selbst oder einem daran formschlüssig befestigten Bauteil hergestellte Druckfläche läßt sich, wie noch verdeutlicht wird, ohne weiteres so ausbilden, daß über diese Fläche und das Zwischenrohrstück auch höchste Schubbeanspruchungen sicher auf das Widerlager übertragen werden, ohne daß es zu Beschädigungen oder gar Zerstörungen kommen kann.

Je nach den Vorgaben des Einzelfalls kann der Festpunkt durch entsprechende, nämliche für bestimmte Belastungstufen und Bangrößen gebildete Paarungen aus Zwischenrohrstück und Widerlager systematisch gebildet werden, wodurch sich die Sicherheit erhöht und die Kosten gesenkt werden.

Vor allem ist das erfindungsgemäße System für alle praktisch vorkommenden Fälle von Festpunkten anwendbar, und zwar unabhängig von den Abmessungen der Rohrleitung, nämlich von dem jeweiligen Außen- und Innendurchmesser und damit von der Wandstärke, ferner von dem jeweils zum Einsatz kommenden Werkstoff. Hier läßt sich die gesamte Palette der derzeit verwendeten Stähle, angefangen von St 35 bis zum hochwertigen Stahl bzw. Edelstahl berücksichtigen, ebenso kommen Rohrleitungen aus anderem Werkstoff in Frage. Stets bietet das erfindungsgemäße System geeignete konstruktive Lösungen, die höchste Sicherheit, Qualität und Prüfbarkeit gewährleisten.

Im einzelnen läßt das erfindungsgemäße System verschiedene Ausgestaltungen zu, von denen vorteilhafte Arten nachstehend hervorgehoben werden:

Die an der Mantelfläche des Zwischenrohrstücks anzuordnende Druckfläche kann gegenüber der Rohrachse schräg oder auch gewölbt sein. Vorzuziehen ist, daß sie in einer Radialebene angeordnet und entweder kreisringförmig ohne Unterbrechung umlaufend gestaltet oder aus mehreren Segmenten zusammengesetzt ist, die in Sonderfällen auch im Abstand voneinander gesetzt sein können. Auf jeden Fall wird man die herstellungstechnisch sowie für die Montage günstigste Lösung bevorzugen, solange die Funktion insbesondere der Abstützung am Widerlager mit der erforderlichen Sicherheit gewährleistet ist.

Es kann z.B. auch zweckmäßig sein, mindestens eine Druckfläche als Kreisabschnitt zu bilden und so z.B. einen Bereich der Rohrmantelfläche gleichsam als Vierkant auszubilden.

Eine vorteilhafte Lösung ist dadurch gekennzeichnet, daß die Druckfläche an einem ringförmigen Wulst des Zwischenrohrstücks gebildet ist. Diese Lösung ist vor allem für den Großrohrbereich bestimmt, hierauf jedoch keineswegs beschränkt. Je nach Schubrichtung kann die Ausbildung einer Druckfläche an nur einer Seite des Wulstes bei nur in eine Richtung wirkenden Schubkräften ausreichen oder aber eine Druckflächenausbildung an beiden Seiten des von der Mantelfläche vorstehenden Wulstes erforderlich sein. Die ringförmige Druckfläche bietet eine zuverlässige rohrseitige Übertragungsfläche für die anstehenden Schubkräfte. Für die Ausbildung des Wulstes gibt es verschiedene zweckmäßige Herstellungsweisen.

Durch besondere Festigkeit ist die Wulstausbildung gekennzeichnet, bei der Wulst mit dem Zwischenrohrstück einteilig ist. In diesem Fall können die an den Wulst angrenzenden Abschnitte des Zwischenrohrstücks beispielsweise abgedreht werden. Der Wulst läßt sich jedoch auch durch Stauchen oder Schmieden mit anschließender Bearbeitung bilden. In jedem Falle entsteht ein Wulst, dessen Druckfläche für die Übertragung höchster Schubbelastungen geeignet ist, ohne daß der Wulst einen unverhältnismäßig großen Durchmesser gegenüber dem normalen Rohrleitungsaußendurchmesser aufweisen muß. Im übrigen liegen die Herstellungskosten beim Herstellen des Wulstes durch Abdrehen der angrenzenden Rohrabschnitte nicht höher als die durch Aufschweißen von Nocken aufzuwendenden Kosten. Die Festigkeit der Verbindung zwischen dem Wulst und dem Körper des Zwischenrohrstücks liegt jedoch sehr viel höher als die Festigkeit, die für eine Verbindung zwischen Nocken und Rohrwandung durch Schweißen erzielbar ist. Vor allem kann jedoch ein Kranz von auf die Rohrwandung aufgeschweißten Nocken niemals eine vergleichbare Sicherheit bieten, wie sie ein in der vorbeschriebenen Weise ausgebildeter Wulst an einem Zwischenrohrstück schafft.

Statt einer einteiligen Ausbildung mit dem Zwischenrohrstück läßt sich der Wulst jedoch, wie oben erwähnt auch als zunächst separates, ein- oder mehrteiliges, ringförmiges Bauteil formschlüssig an der Mantelfläche des Zwischenrohrstücks befestigen, beispielsweise durch Aufschrumpfen oder auch durch axiales Verspannen eines z.B. diagonal geteilten Wulstrings insbesondere in der nachfolgend beschriebenen vorteilhaften Weise. Auch bei dieser Herstellungsart ist die erreichbare Sicherheit noch weitaus höher als beim Aufschweißen von Nocken.

Eine vorteilhafte formschlüssige und kraftschlüssige Verbindung der vorstehenden Art zwischen einem Zwischenrohrstück und einem Wulst als zunächst separatem, ringförmigen Bauteil ergibt sich, wenn der Wulst als Ring auf einen Abschnitt des Zwischenrohrstücks aufgeschrumpft oder aufgestaucht oder dergleichen ist, wobei dieser Abschnitt einen geringfügig kleineren Außendurchmesser als die übrige Mantelfläche des Zwischenrohrstücks aufweist, wobei dieser Abschnitt - je nach Schubkraftbelastung - von einem Ende des Zwischenstücks ausgehend bis zu der Druckfläche verläuft oder aber als flache, ringförmige Ausnehmung mit zwei Druckflächen als Begrenzung an beliebiger Stelle zwischen den Enden des Zwischenrohrstücks ausgeführt ist. Diese Ausbildung reduziert die Räum- bzw. Dreharbeiten, die beispielsweise bei der einteiligen Ausführung anfallen, auf das Abtragen eines sehr flachen Rohrabschnitts, der gerade ausreicht, um einen Formschluß mit dem inneren Teil des Wulstringes herbeizuführen. Der Materialabtrag dient hier also nicht der Schaffung einer ausreichend breiten kreisringförmigen Druckfläche/sondern nur der Schaffung einer ringförmigen Anlagefläche als axialem Anschlag für einen Wulstring. Dieser wird dann bezüglich seines Außen- und Innendurchmessers so gewählt, daß eine ausreichend breite kreisringförmige Druckfläche für die Übertragung der Schubkräfte von dem Wulstring auf das Widerlager entsteht. Ob der Materialabtrag von einem Ende des Zwischenrohrstücks bis zu der vorgesehenen Druckfläche erfolgt oder ob man nur eine flache ringförmige Ausnehmung dort, wo der Wulstring sitzen soll, schafft, hängt davon ab, ob die Schubkräfte nur in einer oder in beiden axialen Richtungen wirken. In jedem Falle bereitet es kein Problem, den Wulst anschließend als Ring an dem vorgesehenen Abschnitt durch Aufstauchen, Aufschrumpfen etc. formschlüssig zu befestigen, wobei innen an dem Wulst als Ring auch eine formschlüssige Verdrehsicherung angearbeitet sein kann, für die ein entsprechender Eingriff an dem Abschnitt vorzubereiten ist.

Alternativ zur Ausbildung eines von der Mantelfläche des Zwischenrohrstücks außen mehringförmig vorstehenden Wulstes kann die Druckfläche auch an einer ringförmigen Ausnehmung an dem Zwischenrohrstück ausgebildet sein. Im Normalfall bilden sich hierbei zwei die Ausnehmung begrenzende Druckflächen. Diese erstrecken sich von ihrer äußeren Kante her nach innen, so daß sie eine verdeckte und geschützte Lage einnehmen können, wenn sie mit dem Widerlager in Eingriff gebracht werden. Als Ausgangswerkstück für das Zwischenrohrstück kann wie im Falle der Wulstausbildung normales Rohrhalbzeug verwendet werden, das jedoch einen größeren Außendurchmesser als die übrige Rohrleitung aufweisen muß, der sich nach der notwendigen Breite der kreisringförmigen Druckfläche bestimmt. Bei Schaffung einer ringförmigen Ausnehmung läßt sich diese zur Erhöhung der Festigkeit auch zunächst vorschmieden und anschließend spanabhebend bearbeiten. Die Schaffung der Druckflächen durch ringförmige Ausnehmungen im Zwischenrohrstück sind vor allem für den unteren Durchmesserbereich der Rohrleitungen bestimmt, ohne jedoch hierauf beschränkt zu sein.

Kennzeichnend für die erfindungsgemäßen Zwischenrohrstücke ist, daß sie, vor. Ausnahmen abgesehen, wesentlich kürzer als die üblichen Rohrschüsse sind. Deshalb ist auch die zur Schaffung von kreisringförmigen Druckflächen erforderliche Dickwandigkeit der Zwischenrohrstücke angesichts der überragenden sonstigen Vorteile des erfindungsgemäßen Systems ohne weiteres in Kauf zu nehmen, zumal die Zwischenrohrstück vergleichsweise kurz, nämlich nur so lang zu bemessen sind, daß genügend Platz für den Wulst bzw. die ringförmige Ausnehmung und für das Widerlager sowie für die Verbindungen zu den benachbarten Rohrschüssen ist. Der Innendurchmesser muß stets dem vorgegebenen Innendurchmesser der Rohrleitungen entsprechen, aber der Außendurchmesser wird so gewählt, daß der Druchmesser der ringförmigen Ausnehmung dem Außendurchmesser der übrigen Rohrleitung entspricht.

Auch aus Gründen einer möglichst kurzen Baulänge des Zwischenrohrstücks ist es zweckmäßig, daß die Druckflächen grundsätzlich im mittleren Bereich des Zwischenrohrstücks ausgebildet werden, was eine Lage rechts oder links kurz vor den Rohrenden keineswegs ausschließt. Auch kann ein Wulst in Sonderfällen fast die Länge des Zwischenrohrstücks einnehmen mit entsprechend weit im Abstand voneinander angeordneten Widerlagern.

Was die Ausbildung des Widerlagers anbelangt, ist es zweckmäßig, das mindestens ein offener und geteilter oder ein geschlossener Druckring oder eine Druckplatte Bestandteil des Widerlagers und Träger der Gegenfläche ist. Gewöhnlich, nämlich dann, wenn mit Schubkräften in beiden Richtungen zu rechnen ist, werden zwei Druckringe verwendet, an denen dann die Gegenflächen für den Eingriff mit den Druckflächen des Wulstes oder der Ausnehmung auszubilden sind.

Eine andere sehr vorteilhafte erfindungsgemäße Weiterbildung für ein Widerlager eines Festpunktes ist gekennzeichnet durch einen aus einer oberen und einer unteren Ringhälfte gebildeten Druckring des Widerlagers, der zum Eingriff mit der ringförmigen Ausnehmung bzw. Ringnut des Zwischenrohrstücks ausgebildet und zur Aufnahme axialer Schubkräfte auf mindestens einer Seite mit einer Gegenfläche zum Eingriff mit der entsprechenden ringförmigen Druckfläche des Zwischenrohrstücks versehen ist, sowie durch zwei im Abstand voneinander aufrecht auf einer Grundplatte befestigbare Lagerböcke, insbesondere in platten- bzw. wangenförmiger Ausbildung, auf denen die untere Ringhälfte in senkrechter Lage zu den Lagerböcken sowie diese überbrückend befestigbar ist.

Vorzugsweise ist die untere Ringhälfte mit ihren Endabschnitten formschlüssig in entsprechende Aufnahmen im Oberteil der Lagerböcke einhängbar.

Mit diesem erfindungsgemäßen Widerlager bzw. dieser Rohrhalterung lassen sich Festpunkte in optimaler Weise planen, herstellen und montieren. Für jede Nenngröße werden, wie bereits beschrieben, Zwischenrohrstücke vorgesehen, die an den Rohrleitungsabschnitten, an denen Festpunkte einzurichten sind, eingefügt, vorzugsweise eingeschweißt werden.

Das Zwischenrohrstück weist an seiner vorzugsweise mittig angeordneten Ringnut mindestens eine ringförmige Druckfläche in form einer der beiden Seitenwände der Ringnut auf. Diese Druckfläche kommt mit einer entsprechenden Gegenfläche an dem aus der oberen und unteren Ringhälfte gebildeten Druckring des Widerlagers in Eingriff, so daß sich für jeden Einzelfall der Ausbildung eines Festpunktes sehr gut vorausberechenbare Verhältnisse ergeben, die höchste Sicherheit gewährleisten. Vor allem lassen sich über die Druckflächen und Gegenflächen höchste Kräfte und Momente sicher auf das Widerlager übertragen, ohne daß es wie z. B. im Falle angeschweißter Nocken zu Beschädigungen oder gar Störungen kommen kann.

Der Erfindungsgemäße Festpunkt eignet sich zur Aufnahme und Ableitung sehr hoher Kräfte, weil der Druckring auf zwei Lagerböcken montierbar ist, die sich vorzugsweise in Form von Platten ausgebildet parallel zur Rohrleitungsmittelachse, also in Richtung der axialen Schubkräfte auf der Grundplatte erstrecken. Jedoch auch in Querrichtung ist der erfindungsgemäße Festpunkt hochbelastbar, weil die im Abstand voneinander stehenden Lagerböcke die untere Ringhälfte des Druckrings des Widerlagers sehr sicher abstützen.

Ein sehr wesentlicher Vorteil der erfindungsgemäßen Konstruktion besteht darin, daß sich eine günstige Wärmeableitung ergibt. Denn die Befestigung der unteren Ringhälfte auf den beiden auseinanderstehenden Lagerböcken bewirkt eine relativ offene Bauweise, bei der der Wärmeübergang von der Rohrleitung auf die Verankerung des Festpunktes relativ gering ist, weil der Druckring an den beiden Endabschnitten der unteren Ringhälfte mit den Lagerböcken nur geringe Kontaktflächen aufweist. Deshalb weist der erfindungsgemäße Festpunkt eine besondere Eignung für thermisch hochbelastete Rohrleitungssysteme auf. Auch ist durch die erhöhte Bauweise eine optimale Isolierung der Rohrleitung auch im Bereich des Festpunktes möglich.

Die vorzugsweise formschlüssig vorgesehene Verbindung, bei der die Endabschnitte der unteren Ringhälfte in entsprechende Aufnahmen im Oberteil der Lagernöcke einhängbar sind, bewirkt eine hohe Stabilität und Steifigkeit der Verbindung und erleichtert die Montage.

Nach einer Weiterbildung der Erfindung ist vorgesehen, daß die Aufnahmen in den Lagerböcken oben offen und mit senkrechten Stützflächen versehen sind, zwischen denen der jeweilige Endabschnitt der unteren Ringhälfte paßgenau einzufügen ist. Auf diese Weise werden auf den Druckring übertragene axiale Schubkräfte unmittelbar über die Stützflächen, die mit den entsprechenden Seitenflächen der Endabschnitte im Eingriff stehen, auf die Lagerböcke übertragen und so in die Festpunktverankerung abgeleitet.

Vorzugsweise ist nach einer Weiterbildung ferner vorgesehen, daß jeder Endabschnitt der unteren Ringhälfte eine nach unten offene Ausnehmung zum formschlüssigen Übergreifen des Lagerbocks im Bereich der Aufnahme zum Festlegen der unteren Ringhälfte senkrecht zur Rohrleitungslängsachse aufweist. Diese hochfeste sowie formschlüssige Verbindung ist nicht nur bezüglich Querkräften hochbelastbar sondern auch im Hinblick auf Torsionskräfte bzw. -stöße, die auf die Rohrleitung wirken.

Die formschlüssige Verbindung zwischen Grundplatte, Lagerbock sowie unterer Ringhälfte ergibt eine hochbelastbare Rahmen- bzw. Kastenkonstruktion.

Vorteilhafte Weiterbildungen dieses Widerlagers, insbesondere auch eine leichte und einfache Montage, ergeben sich auch aus Anspruch 13 und 14.

Schließlich ist erfindungsgemäß vorgesehen, daß die ringförmige Lagerbohrung im Druckring des Widerlagers zur Halterung des Zwischenrohrstücks und insbesondere zur thermischen und elektrischen Isolierung zwischen dem Zwischenrohrstück und dem Druckring mit kranzförmig angeordneten Stützelementen aus entsprechendem Material, beispielsweise aus Keramikmaterial besetzt ist. Die Stützelemente sind zweckmäßig in die Ringfläche der Lagerbohrung eingelassen. Die Belastbarkeit des Isolierwerkstoffes bestimmt dann in hohem Maße die aufzunehmenden Kräfte und Momente. Die thermische und/oder elektrische Isolierung kann auch unter Benutzung von Stützelementen aus elektrisch leitendem und wärmeleitendem Material bewirkt werden, wenn die Stützelemente gegenüber ihrer Aufnahmefläche in der Lagerbohrung entsprechend isoliert werden durch Anordnen eines entsprechend isolierten Futters.

Vorzugsweise bildet im Falle einer paarweisen Anordnung von Druckflächen an einem Wulst der jeweils radial innen an die Druckfläche anschließende und sich axial erstreckende Abschnitt der Mantelfläche einen Sitz für den oder die Druckringe der Halterung. Insofern fällt den an die Druckflächen angrenzenden Mantelabschnitten des Zwischenrohrstücks zumindest die Funktion der Zentrierung bzw. zentrischen Rohrhalterung zu. In vielen Fällen ist zweckmäßigerweise zwischen dem Zwischenrohrstück und dem Widerlager, nämlich zwischen den Druckringen und dem Zwischenrohrstück eine Verdrehsicherung vorgesehen, um einer Verdrehung des Rohrs infolge Torsionsspannungen zu verhindern. Hierfür kommen herkömmliche Sicherungen wie Nut und Feder in Betracht.

Es ist vorteilhaft, wenn im Falle der Verwendung eines Wulstes zur Befestigung des Zwischenrohrstücks insbesondere gegen Verdrehen mindestens einer der Druckringe bei Druckringpaaren bzw. ein einzelner Druckring einen Spannring aufweist, der neben dem Wulst in einer ringförmigen Ausnehmung des betreffenden Druckrings angeordnet ist. In diesem Fall befindet sich die Gegenfläche des Widerlagers an dem betreffenden Druckring, über den die Schubkräfte in den betreffenden Druckring übertragen werden. Der Spannring kann beispielsweise aus zwei im Querschnitt keilförmigen und in bekannter Weise zur Bildung hoher radialer Druckkräfte zusammenwirkenden Ringen bestehen.

Wenn zur Befestigung und Zentrierung ein Wulst am Zwischenrohrstück verwendet wird, ist es vorteilhaft, wenn die axial zusammenspannbaren Druckringe eine einen Teilabschnitt des Wulstes übergreifende ringförmige Ausnehmung aufweisen. Die Spannlänge und damit die Bolzenlänge nimmt ab. Das Widerlager läßt sich in schmaler Bauweise herstellen. Es stehen nicht nur die stirnseitigen Druckflächen des Wulstes sondern auch dessen Mantelfläche für Spannfunktionen und/oder Verdrehsicherungen zur Verfügung. Wenn keine oder keine wesentlichen Torsionsspannungen zu erwarten sind, genügt ein reibungsschlüssiges Einspannen der Mantelfläche des Wulstes zwischen den Halbringen oder Schellenhälften der betreffenden Rohrschelle. Die Druckringe der Schellen werden im übrigen in üblicher Weise in axialer Richtung durch Spannbolzen miteinander verspannt, wobei die Druckflächen des Wulstes mit den entsprechenden Gegenflächen an den Innenseiten der Spannringe in Eingriff kommen und aufeinandergepreßt werden.

In vielen Fällen kann es zweckmäßig sein, daß einer der über oder neben dem Wulst axial miteinander verspannbaren Druckringen des Widerlagers Bestandteil der Verankerung ist. In diesem Fall erstreckt sich der betreffende Druckring vom Bereich des Zwischenrohrstücks aus bis in den Verankerungsbereich, wo eine entsprechende Befestigung erfolgt.

Alternativ zu der vorgenannten Verankerung ist es auch möglich, daß über dem Wulst zwischen den axial miteinander verspannbaren Druckringen eine mit einer entsprechenden Öffnung versehene Ankerplatte befestigt ist. In diesem Fall erstrecken sich die Spannbolzen durch die mittig zwischen den beiden Druckringen angeordnete Ankerplatte hindurch. Diese weist für den Durchgang des Zwischenrohrstücks und für die Aufnahme des Wulstes eine entsprechende Öffnung auf. Ein besonders stark dimensionierter Festpunkt läßt sich auch dadurch ausbilden, daß zwei an den Wulstseiten anliegende Druckplatten oder Druckringe zwischen zwei außenliegenden Ankerplatten axial einspannbar sind. Die unverselle Verwendbarkeit des erfindungsgemäßen Systems schließt auch die Festlegung schräg oder vertikal verlaufender Rohrleitungen ein. Für die vertikale Festlegung einer Rohrleitung ist vorteilhafter Weise eine Aufhängeplatte zwischen den am Wulst miteinander zu verspannenden Druckringen oder Druckplatten befestigt. Diese weist, wenn sie in der Ebene des Wulstes verläuft, eine entsprechende kreisrunde Öffnung für den Durchgang des Zwischenrohrstücks und der Anordnung seines Wulstes auf. Zweckmäßig sind Versteifungsmittel an der bzw. für die Aufhängeplatte vorgesehen. So können senkrecht zu der Aufhängeplatte verlaufende Versteifungswände angebracht werden, an denen sich beispielsweise auch die Aufhängeösen befinden.

Besonders vorteilhaft ist eine ebenfalls vor allem für vertikale Rohrleitungen geeignete erfindungsgemäße Konstruktion, die mindestens eine Druckplatte als Widerlager mit einer Öffnung als Durchgang für das Zwischenrohrstück sowie mit einem ganz oder teilweise als Gegenfläche ausgebildeten Rand der Öffnung für den Eingriff mit einer entsprechenden Druckfläche an dem Wulst des Zwischenrohrstücks für vertikale Rohrleitungen durch Aufhängeelemente, die an gegenüberliegenden Seiten, insbesondere der unteren der Druckplatte(n) befestigbar sind und unabhängig von der Rohrleitungsrichtung durch mindestens eine Versteifungswange, die für eine formschlüssige Befestigung an der Druckplatte bzw. an miteinander zu verspannenden Druckplatten ausgebildet ist.

Ob eine oder mehrere Druckplatten vorgesehen sind, hängt von den jeweiligen Umständen ab. In jedem Falle ist das erfindungsgemäße Gestaltungsprinzip zu verwirklichen.

Die wesentlichen Teile der erfindungsgemäßen Konstruktion, vorgesehen wie ein Bausatz, nämlich die Druckplatte(n) und die Versteifungswangen bilden eine kastenähnliche Konstruktion, die sich im Vergleich zu einer Vertikalschellenkonstruktion sehr einfach und wirtschaftlich fertigen und hinsichtlich ihrer Belastbarkeit relativ einfach berechnen läßt. Jede Druckplatte weist eine Öffnung für den Durchgang des Zwischenrohrstücks auf, und der Rand dieser Öffnung bildet die Gegenfläche des Widerlagers, die mit mindestens einer der Druckflächen am Mantel des Zwischenrohrstücks in Eingriff kommt.

Bei der erfindungsgemäßen Lösung bildet die Druckplatte folglich das Grundelement des Widerlagers für die Verbindung mit den kräfteübertragenden Elementen des Rohrmantels mit der Aufhängevorrichtung, und die Versteifungswangen geben der Konstruktion die notwendige Festigkeit. Diese Aufteilung der grundsätzlichen Funktionen des Widerlagers ermöglicht die Einfachheit der Konstruktion.

Hierzu gehört auch die Ausbildung der Versteifungswangen und der Druckplatte für eine gegenseitige formschlüssige Verbindung. Die Versteifungswangen lassen sich beispielsweise in Hochkantlage auf einer Druckplatte und vorzugsweise in Dickenrichtung der Druckplatte, also ober- und unterhalb derselben anordnen und mittels vertikal durchgehender Spannbolzen befestigen.Erfindungsgemäß wird jedoch ein formschlüssiger Schlitzeingriff bevorzugt, der noch erläutert wird.

Vorzugsweise sind die Versteifungswangen einander auf verschiedenen Seiten des Rohrstücks gegenüberliegend sowie im wesentlichen parallel zur Verbindungslinie der Aufhängeelemente anzuordnen. Auf diese Weise erfolgt eine entsprechend der Biegebeanspruchung der Druckplatte optimale Versteifung der Druckplatte beiderseits des Rohrstücks.

Nach einer sehr bedeutenden Weiterbildung der Neuerung ist für den gegenseitigen Formschluß zwischen Druckplatte und Versteifungswangen vorgesehen, daß die Versteifungswangen für die formschlüssige Verbindung mit der Druckplatte bzw. mit den Druckplatten derartige Schlitze aufweisen, daß die Versteifungswangen jeweils von der Seite her auf die Druckplatte(n) aufschiebbar sind. Hierzu ist es zweckmäßig, daß die Schlitzhöhe der Dicke der Druckplatte entspricht. Vorteilhafterweise soll auch die Schlitzlänge der Druckplatte bzw. dem sich durch den Schlitz erstreckenden Teil der Druckplatte entsprechen.

Durch das bloße Aufschieben der Versteifungswangen ist nicht nur eine überaus einfache Montage sondern auch ein entsprechend leichtes Lösen der Versteifungswangen von der Druckplatte möglich, wenn das Widerlager bzw. der Festpunkt kontrolliert wird oder ein anderer Anlaß für ein Lösen der Bauteile des Festpunktes besteht.

Für eine definierte Lage der Versteifungswangen auf der Druckplatte ist es zweckmäßig, daß entsprechende Anschläge an der Druckplatte vorgesehen sind, bis zu denen die Versteifungswangen auf die Druckplatte aufgeschoben werden. Sehr einfach lassen sich Anschläge durch Bildung entsprechender Absätze an den Ecken der Druckplatte, wenn diese rechteckig ist, herstellen.

Eine besonders hochbelastbare Konstruktion läßt sich mit dem erfindungsgemäßen Bausatz erzielen, wenn zwei übereinander anzuordnende Druckplatten vorgesehen sind, auf die Versteifungswangen mit je zwei Schlitzen aufschiebbar sind. In diesem Fall wirken die Versteifungswangen wie oberhalb und unterhalb der beiden meist im Abstand voneinander angeordneten Druckplatten überstehende Seitenwände, und die Konstruktion ist im Hinblick auf ihre Form und ihre Festigkeitswirkung einem Kasten noch ähnlicher als im Falle eines Festpunktes mit nur einer Platte.

Vor allem bei Anwendung des einfach herstellbaren Schlitzeingriffs zwischen Druckplatte und Versteifungswangen ist die Gefahr eines unbeabsichtigten Abgleitens der Versteifungswangen von der Druckplatte kaum zu befürchten. Dennoch ist es zweckmäßig, daß der Bausatz auch Riegelstücke umfaßt, die als Sicherung des formschlüssigen Eingriffs zwischen der Druckplatte und den Versteifungswangen dienen und hierfür an dem entsprechenden Randstreifen der Druckplatte zu befestigen sind.

Eine vorteilhafte Verstärkung der Gesamtkonstruktion ergibt sich, wenn die Riegelstücke im Falle der Verwendung von zwei im Abstand voneinander anzuordnenden Druckplatten als Füllstücke zwischen und an diesen randseitig befestigbar sind. Denn die Riegelstücke wirken hierbei als zusätzliche Versteifung.

Es ist vorzuziehen, daß die Riegelstücke außerhalb des Bereichs zwischen der Öffnung und dem Rand der Druckplatte angeordnet sind, damit nicht dort Schraubenlöcher den Materialquerschnitt verringern, sondern an anderer Stelle, beispielsweise in einer Reihe mit anderen Schraubenlöchern angeordnet werden.

Wenn zwei im Abstand übereinander angeordnete Druckplatten verwendet werden, trägt die untere Platte die Aufhängeelemente, und die obere Platte ist kürzer als die untere, oder sie weist Ausnehmungen für den Durchgang der Aufhängeelemente auf. Insofern bestehen für die obere Druckplatte verschiedene, von den jeweiligen Umständen abhängige Gestaltungsmöglichkeiten, während zweckmäßig die untere Druckplatte eine Länge erhält, die durch den Abstand der Aufhängeelemente bestimmt ist. Die Länge der Versteifungswangen ist auf jeden Fall auf die Länge der die Aufhängeelemente tragenden Platte abgestimmt. Während für die untere Platte schon aus Festigkeitsgründen sowie für einen sicheren gegenseitigen Eingriff mit den Versteifungswangen eine - von oben gesehen - im wesentlichen rechteckige Form, von Ausnehmungen an den vier Ecken abge-

7

sehen, bevorzugt wird, kann die obere Platte nicht nur kürzer oder mit Ausnehmungen gestaltet sein, sondern es kann sich dabei auch um einen kreisrunden Druckflansch handeln, dessen den Versteifungswangen zugewandter Rand auch nicht notwendigerweise, wie die untere Druckplatte, in einem formschlüssigen Schlitzeingriff mit den Versteifungswangen stehen muß, sondern beispielsweise auch lediglich mit seinen seitlichen Randflächen an den Innenseiten der Versteifungswangen anliegen kann. Diese Anlage kann bei Bedarf durch eine von den Seiten her anbringbare Schraubbefestigung verstärkt und gesichert werden.

Statt am Rohrmantel angeschweißter Nocken wird erfindungsgemäß bevorzugt, das mindestens eine Druckfläche an einem ein- oder mehrteiligen Wulst des Zwischenrohrstücks für den Eingriff mit der entsprechenden Gegenfläche der Druckplatte(n) vorhanden ist. Durch einen Wulst, der entweder einteilig mit dem Zwischenrohrstück oder aber formschlüssig und gegebenenfalls zusätzlich reibungsschlüssig am Rohrmantel befestigt ist, lassen sich wesentlich höhere Schubkräfte auf das Widerlager übertragen als mittels angeschweißter Nocken, und der Wulst bietet durch die vorzugsweise formschlüssige oder einteilige Ausbildung mit dem Rohrstück eine wesentlich höhere Sicherheit als angeschweißte Nocken. Der Wulst ist zweckmäßig als durchgehender Kreisring gestaltet. Wenn es die Umstände erfordern, läßt er sich auch aus einem Kranz von Wulstsegmenten zusammensetzen. Auf jeden Fall ist eine durchgehende oder aus mehreren Abschnitten gebildete Druckfläche, die in den meisten Fällen in einer Radialebene des Rohrstücks liegt, für den Eingriff mit der entsprechenden Gegenfläche der Druckplatte ausgebildet.

Eine ringförmige Druckfläche läßt sich, wenn ausschließlich in einer axialen Richtung wirkende Schubkräfte vorliegen, statt an einem Wulst des Rohrstücks auch an einem entsprechenden Absatz am Rohrmantel herstellen.

Eine vorteilhafte Ausführungsform mit Ausbildung eines Wulstes am Rohrmantel ist gekennzeichnet durch je eine Druckplatte für den Eingriff mit je einer Stirnfläche des Wulstes als Druckfläche und durch Spannmittel zum gegenseitigen Verspannen der Druckplatten am Wulst in axialer Richtung. Die gegenseitige Verspannung der Druckplatten am Wulst liegt nicht nur eindeutig an den entsprechenden Druckflächen des Wulstes fest sondern verhindert gleichzeitig eine Verdrehung der Druckplatten gegenüber dem Rohrstück bzw. umgekehrt des Rohrstücks gegenüber den Platten.

Statt eines Wulstes oder auch statt eines einfachen Absatzes ist eine alternative Weiterbildung der Erfindung gekennzeichnet durch eine ringsumlaufende Nut am Mantel des Rohrstücks für die Ausbildung der Druckfläche und durch eine entsprechende Ausbildung von Gegenflächen an der bzw. den Druckplatte(n). Auch die Ausbildung der insbesondere die Schubkräfte vom Rohr auf das Widerlager übertragenden Druckfläche an einer Seitenwand oder auch an beiden Seitenwänden einer Nut gestattet in berechenbarer und sicherer Weise die Übertragung wesentlich höherer Kräfte, wie dies bereits im Zusammenhang mit der Ausbildung eines Wulstes am Mantel des Rohrstücks erläutert wurde, als im Falle der Verwendung angeschweißter Nocken.

Es ist noch darauf hinzuweisen, daß zwar vorzugsweise einteilige Druckplatten verwendet werden. Sie können jedoch auch eine Teilung beispielsweise in der Mittenebene aufweisen, die die Öffnung für die Rohrleitung durchquert. Auf die zweiteilige(n) Druckplatte(n) aufgeschobene Versteifungswangen sorgen auch in diesem Fall für eine ausreichende Biegesteifigkeit.

Ausführungsbeispiele der Erfindung werden nachfolgend mit Bezug auf die Zeichnungen näher erläutert. In den Zeichnungen zeigen:

Fig. 1 einen Längsschnitt eines Zwischenrohrstücks mit einem einteilig mit dem Rohrkörper ausgebildeten Wulst;

Fig. 2 einen Längsschnitt eines Zwischenrohrstücks mit einer ringförmigen Ausnehmung;

Fig. 3 einen Längsschnitt eines Zwischenrohrstücks mit auf dem Rohrmantel befestigten Wulst;

Fig. 4 einen Längsschnitt eines Zwischenrohrstücks mit einem auf dem Rohrmantel formschlüssig befestigten Wulst;

Fig. 5 eine perspektivische Ansicht eines aus einem Zwischenrohrstück und einem Widerlager bestehenden Festpunktes;

Fig. 5a und 5b zwei Ansichten eines weiteren Ausführungsbeispiels der Art nach Fig. 5;

Fig. 5c und 5d Ansichten von zwei weiteren Ausführungsformen eines Bauteils des Festpunktes nach Fig. 5a und Fig. 5b;

Fig. 6 eine Langsschnitt eines Teils eines Festpunktes mit Zwischenrohrstück, Druckringen und Ringfedern;

Fig. 7 einen Längsschnitt eines Teils eines Festpunktes mit einem Zwischenrohrstück und mit einen Wulst am Zwischenrohrstück übergreifenden Druckringen;

Fig. 8 eine Schnittdarstellung eines Festpunktes einer Rohrleitung mit Zwischenrohrstück, Druckplatte, Verankerungsplatte und Verankerung;

Fig. 9 eine Seitenansicht eines weiteren Ausführungsbeispiels eines Festpunktes mit Widerlagern im Bereich der Enden des Zwischenrohrstücks;

Fig. 10 eine schematische Stirnansicht zu Fig. 9;

Fig. 11 eine Schnittdarstellung eines Festpunktes einer Rohrleitung mit Zwischenrohrstücken, Druckplatten und Verankerungsplatten;

Fig. 12 eine schematische Darstellung einer Querschnittsansicht eines Festpunktes einer vertikalen Rohrleitung mit Aufhängevorrichtung;

Fig. 13 eine perspektivische Ansicht eines weiteren Ausführungsbeispiels eines Festpunktes für eine vertikale Rohrleitung;

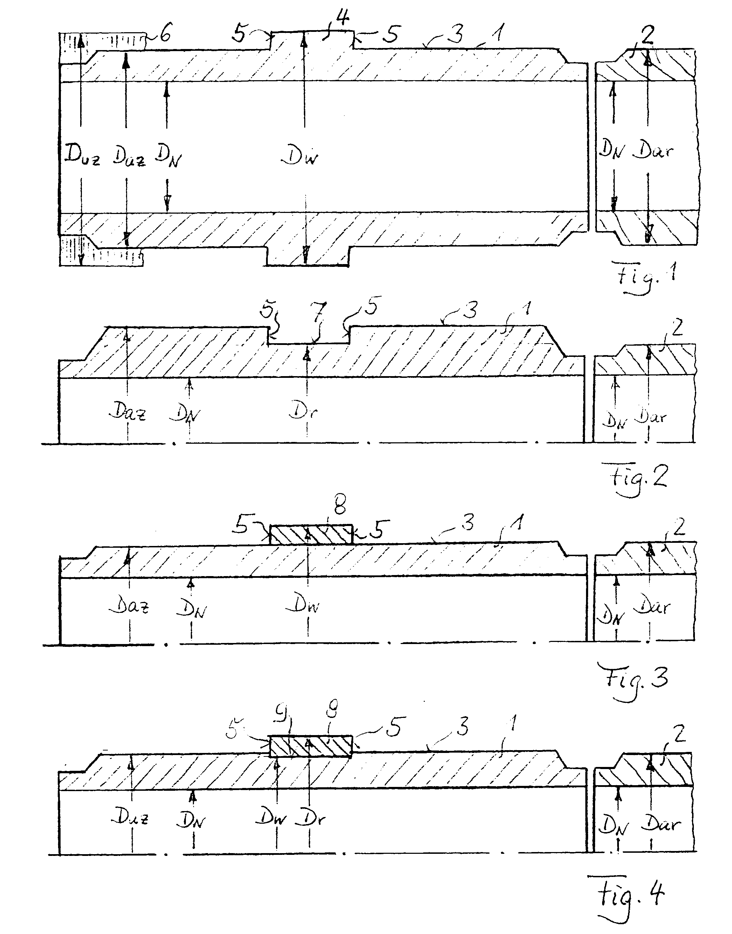

In Figur 1 ist ein Zwischenrohrstück 1 dargestellt, das an der Stelle einer Rohrleitung eingefügt wird, an der ein Festpunkt der Rohrleitung einzurichten ist. Die Einfügung des Zwischenrohrstücks 1 in die Rohrleitung wird durch die Darstellung des rechts an das Zwischenrohrstück 1 angrenzenden Rohrschusses 2 veranschaulicht. Das kurze Zwischenrohrstück 1 ist an seinen Enden in üblicher nicht dargestellter Weise mit den angrenzenden Rohrschüssen verbunden.

Das Zwischenrohrstück 1 weist einen nach außen über den Rohrmantel 3 vorstehenden, kreisringförmigen Wulst 4 in mittiger Lage auf, an dessen beiderseitigen Stirnseiten 5, also in Radialebenen des Zwischenrohrstücks 1, Druckflächen 5 ausgebildet sind.

Wie die Zeichnung veranschaulicht, ist der Wulst 4 einteilig mit dem Rohrkörper des Zwischenrohrstücks 1 ausgebildet. Hierfür ist der ursprüngliche und in der Zeichnung mit 6 bezeichnete Rohrkörper, bei dem es sich um einen Abschnitt eines handelsüblichen Stahlrohrhalbzeuges handeln kann, vom Durchmesser $D_{uz}$ beiderseits des Wulstes 4 bis auf den Außendurchmesser $D_{az}$ des Zwischenrohrstücks 1 abgedreht worden. So entspricht $D_{uz}$ etwa dem Wulstdurchmesser $D_w$, und der Außendurchmesser $D_{az}$ des Zwischenrohrstücks 1 entspricht dem Außendurchmesser $D_{ar}$ ds Rohrschusses 2. Die übereinstimmenden Innendurchmesser $D_N$ im Zwischenrohrstück 1 und im Rohrschuß 2 entsprechen dem Nenndurchmesser der Rohrleitung. Aus Sicherheitsgründen kann der Druchmesser $D_{az}$ auch größer als $D_{ar}$ gewählt sein. Auf jeden Fall sind statt scharfer Absätze zur Vermeidung von Kerbwirkungen Radien oder Schrägen mit entsprechenden Übergängen (nicht dargestellt) vorzusehen.

Im Gegensatz zu dem ersten Ausführungsbeispiel gemäß Figur 1 ist bei dem zweiten Beispiel gemäß Figur 2 die Ausbildung der Druckflächen 5 an einer mittigen in den Rohrmantel 3 geschnittenen kreisringförmigen Ausnehmung 7 vorgenommen, wodurch sich die Abdreharbeit gegenüber dem ersten Beispiel reduziert und, wie noch deutlich wird, verdeckt sowie geschützt innenliegende Druckflächen 5 entstehen. Der Durchmesser $D_r$ der ringförmigen Ausnehmung 7 entspricht aus Festigkeitsgründen mindestens dem Außendurchmesser $D_{ar}$ des Rohrschusses 2, so daß es aus Sicherheitsgründen am Zwischenrohrstück 1 ohne weiteres zu einer erheblich dickeren Wandung als bei dem Rohrschuß 2 kommen kann.

Während im ersten Ausführungsbeispiel die Breite des kreisringförmigen Wulstes 4 der Differenz zwischen den Durchmessern $D_w$ und $D_{az}$ entspricht, ergibt sich im zweiten Ausführungsbeispiel die Breite der kreisringförmigen Ausnehmung 7 durch die Differenz zwischen dem Durchmesser $D_{az}$ und $D_r$, wobei letzterer über dem Durchmesser $D_{ar}$ liegt, auch wenn dies in Fig. 2 nicht so dargestellt ist.

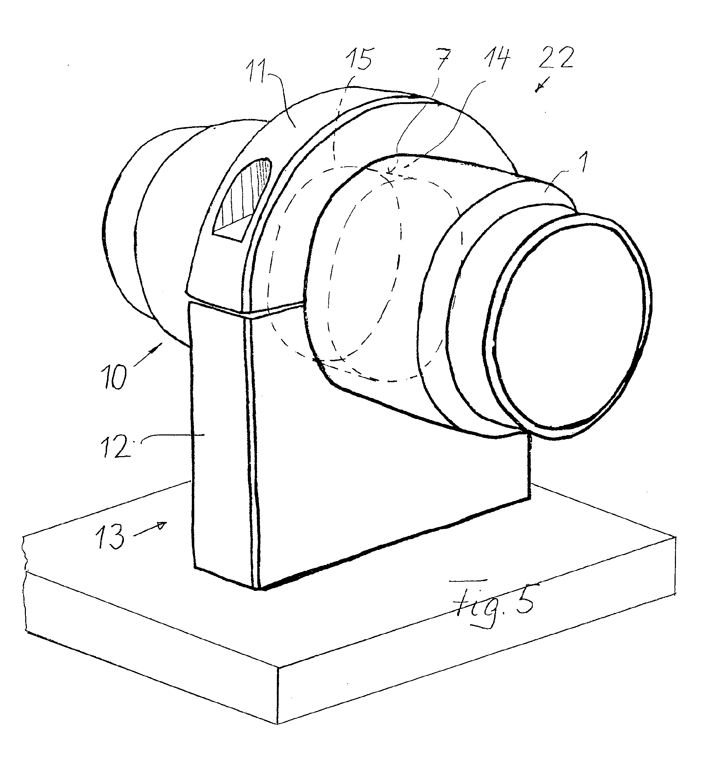

Im dritten Ausführungsbeispiel gemäß Figur 3 liegen die Druckflächen 5 an den beiderseitigen Stirnflächen eines Wulstringes 8, der auf den Rohrmantel 3 des Zwischenrohrstücks 1 aufgeschrumpft, aufgestaucht oder in anderer Weise so befestigt ist, daß eine axiale Verschiebung des Wulstringes 8 bei Wirkung bestimmter axialer Schubkräfte nicht möglich ist und bezüglich einer bestimmten Torsionsbelastung auch keine Verdrehung des Wulstringes 8 auf dem Zwischenrohrstück 1 erfolgt. Der Außendurchmesser $D_{az}$ des Zwischenrohrstücks 1 ist gleich dem Durchmesser $D_{ar}$ des Rohrschusses 2 oder größer als dieser, und die Breite der kreisringförmigen Druckflächen 5 entspricht der Differenz zwischen den Durchmessern $D_w$ und $D_{az}$.

Mit Rücksicht auf sämtliche Ausführungsbeispiele sei noch einmal darauf hingewiesen, daß das erfindungsgemäße System nicht auf Rohrleitungen aus einem bestimmten Material beschränkt ist. Lediglich zur Veranschaulichung ist für die vorliegenden Ausführungsbeispiele ein Stahlrohrkörper für das Zwischenrohrstück sowie für die Rohrleitungen angenommen worden, wodurch sich auch die möglichen Bearbeitungs- und Befestigungsmaßnahmen ergeben. So läßt sich der Wulstring 8 an dem Rohrmantel 3 des Zwischenrohrstücks 1 beispielsweise auch durch Schweißen befestigen, gegebenenfalls nach vorherigem Aufschrumpfen zwecks weiterer Erhöhung der Befestigungswirkung.

Im vierten Ausführungsbeispiel gemäß Figur 4 ist das dritte Ausführungsbeispiel insoweit weiterentwickelt worden, als in mittiger Lage auf dem Zwischenrohrstück 1 ein Wulstring 8 formschlüssig in einer flachen kreisringförmigen Ausnehmung 9 im Rohrmantel 3 angeordnet ist. Da aus Festigkeitsgründen der kleinste Außendurchmesser des Zwischenrohrstücks 1 dem Außendurchmesser $D_{ar}$ des Rohrschusses 2 mindestens zu entsprechen hat, ist der Rohrdurchmesser $D_{az}$ mindestens um das Zweifache der Tiefe der flachen kreisringförmigen Ausnehmung 9 größer als der Außendurchmesser $D_{ar}$ des Rohrschusses 2. Zur Schaffung gleichbreiter Druckflächen 5 ist der Wulstring 8 um das Maß der Tiefe der kreisringförmigen Ausnehmung 9 dicker als der Wulstring 8 im dritten Ausführungsbeispiel gemäß Figur 3. Der Wulstring 8 wird zur Befestigung auf dem Zwischenrohrstück 1 zunächst bis auf eine Temperatur angelassen, die zu einer ausreichenden Durchmesservergrößerung führt, so daß der Innendurchmesser des Wulstrings 8 geringfügig größer als der Außendurchmesser $D_{az}$ des Zwischenrohrstücks 1 ist. Der Wulstring 8 läßt sich nun über den Rohrmantel 3 schieben und in der Ausnehmuhg 9 anordnen, wo sich nach dem Erkalten des Wulstrings 8 ein entsprechend fester Sitz ergibt. Grundsätzlich ist eine zusätzliche Schweißbefestigung in Sonderfällen möglich.

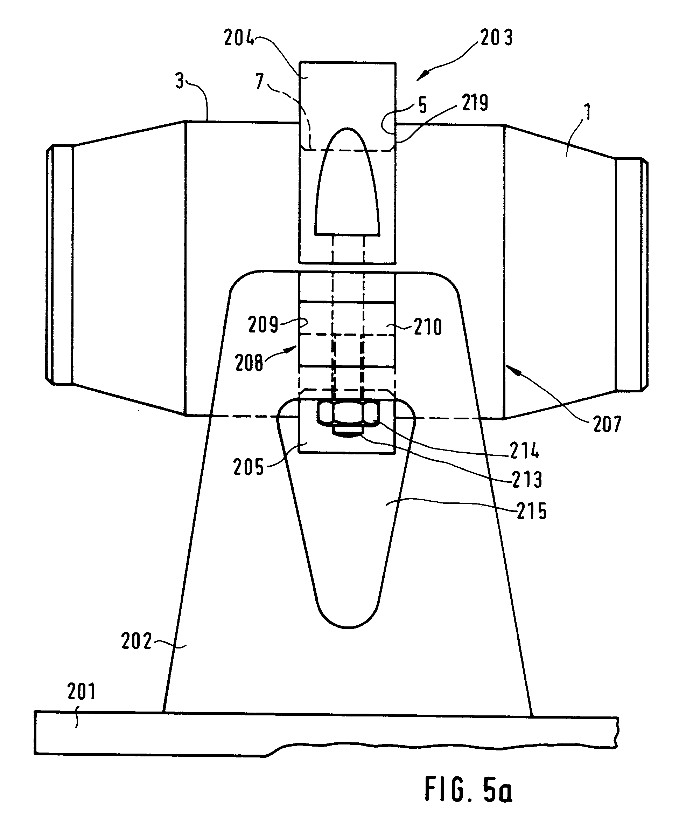

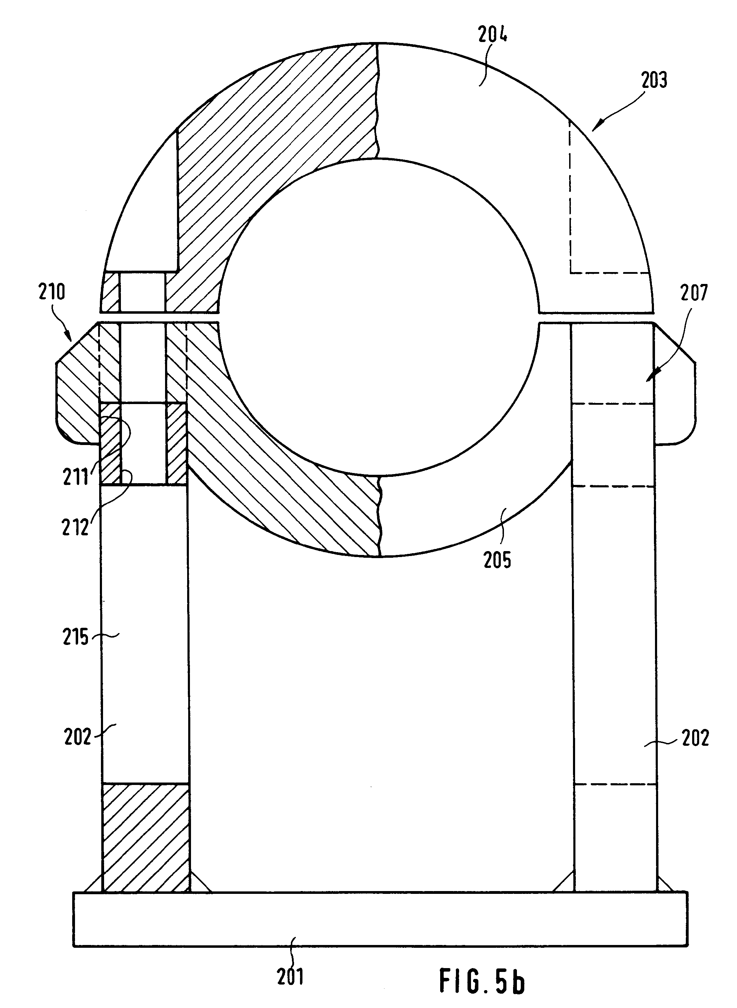

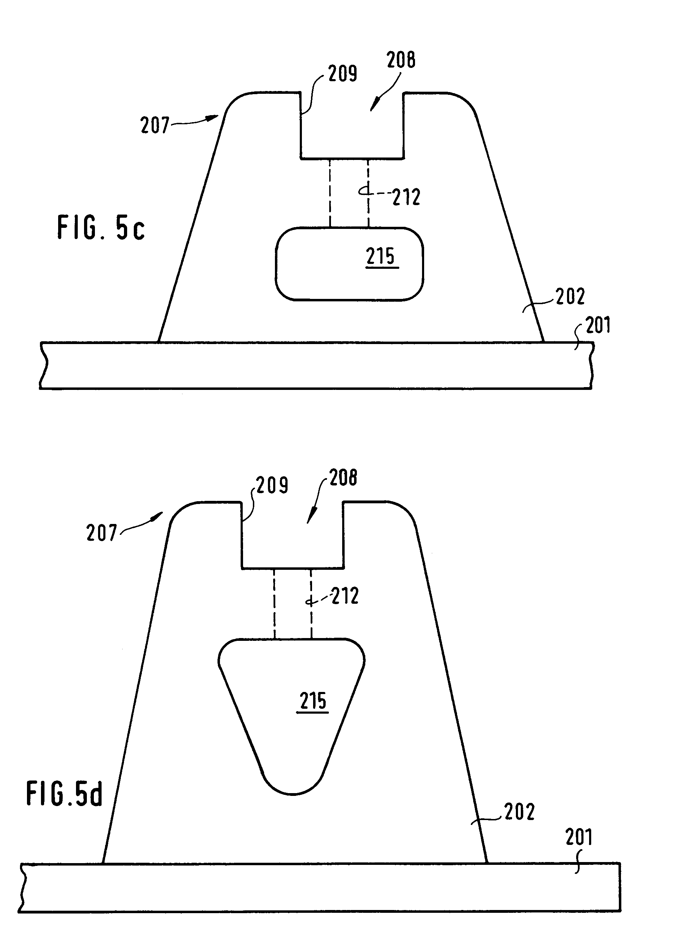

In dem Ausführungsbeispiel gemäß Figur 5 besteht ein Widerlager aus einem Lager oder Druckring 10 aus zwei miteinander verspannbaren Hälften 11, 12, wobei sich letztere in einem auf einer Grundplatte vorzugsweise durch Schweissen befestigten Schaft 13 fortsetzt. In dem Druckring 10 ist ein Zwischenrohrstück 1 nach dem zweiten Ausführungsbeispiel gemäß Figur 2 eingespannt. In gestrichelten Linien ist die Bohrung des Druckrings 10 dargestellt, die mit der Mantelfläche der Ausnehmung 7 des Zwischenrohrstücks 1 in Eingriff steht. Die nicht sichtbaren Druckflächen 5 stehen etwa an den mit 14 und 15 bezeichneten Stellen mit entsprechenden Gegenflächen des Druckrings 10 bzw. der Hälften 11, 12 im Eingriff zur Aufnahme axialer Schubkräfte, wie einleitend bereits ausführlich dargestellt wurde. Auch die Ausbildung entsprechender Mittel zur Verhinderung einer Verdrehung des Zwischenrohrstücks 1 im Druckring 10 können vorgesehen sein.

Bei dem gegenüber Fig. 5 abgewandelten weiteren Ausführungsbeispiel gemäß Fig. 5a-5d besteht der für eine Rohrhalterung hergestellte Festpunkt im wesentlichen aus einer Grundplatte 201 mit im Abstand sowie parallel voneinander in aufrechter Lage auf der Grundplatte 201 durch Schweißen befestigten plattenförmigen Konsolen oder Lagerböcken 202, ferner aus einem auf die Lagerböcke 202 formschlüssig aufgesetzten und an diesen befestigten Druckring 203 und schließlich aus dem im Druckring 203 eingespannten Zwischenrohrstück 1

Das Zwischenrohrstück 1 wird, wie oben geschildert, durch Schweißen in die Rohrleitung eingefügt und befestigt.

Das Zwischenstück 1 ist den Prozessbedingungen des Rohrleitungssystems anzupassen und auszulegen, während die Teile der Halterungskonstruktion allein nach statistischen Gesichtspunkten ausgelegt werden.

Das Zwischenrohrstück 1 weist in mittiger Lage an seiner Mantelfläche 3 eine nur in Fig. 5a als gestrichelte Linie eingezeichnete Ringnut 7 auf, deren Seitenwände die Druckflächen 5 bilden wie gemäß Fig. 2.

An dem Oberteil 207 jedes Lagerbocks 202 befindet sich eine oben offene, im Querschnitt rechteckige Aufnahme 208 mit zur Längsachse des Zwischenrohrstücks 1 senkrechten Stützflächen 209, wie sich aus Fig. 5a ergibt.

Der Druckring 203 ist in eine obere Ringhälfte 204 und eine untere Ringhälfte 205 unterteilt. Die mit 110 bezeichneten Endabschnitte der unteren Ringhälfte 205 weisen an der Unterseite jeweils eine Ausnehmung 211 auf, deren lichte Weite der Breite des betreffenden Lagerbocks 202 entspricht, so daß ein paßgenauer Eingriff zwischen den Lagerböcken 202 und der unteren Ringhälfte 205 erfolgt, wenn diese die Lagerböcke 202 übergreifend auf diese aufgesetzt wird. Dabei erfolgt gleichzeitig der Eingriff zwischen den Seitenflächen der unteren Ringhälfte 205 und den Stützflächen 209 der Aufnahme 208 in den Lagerböcken 202.

Die Lagerböcke 202 weisen jeweils ein Fenster 215 auf, von dessen oberer Begrenzung sich eine Bohrung 212 durch das Oberteil 207 nach oben erstreckt und sich in entsprechend fluchtenden Bohrungen im Endabschnitt 210 der unteren Ringhälfte 205 sowie in der oberen Ringhälfte 204 fortsetzt.

Zum Montieren des Festpunktes wird das Zwischenrohrstück 1 zwischen die obere und die untere Ringhälfte 204 bzw. 205 gespannt, indem jeweils an den Endabschnitten 210 Schraubenbolzen 213 von oben durch die Bohrungen geführt und mit einer Schraubenmutter 214 und ggf. zusätzlichen Sicherungen verspannt werden (vgl. Fig. 5a). Dabei läßt sich der Kopf des Schraubenbolzens 213 seitlich so abflachen, daß sich durch den Eingriff mit der benachbarten Wandfläche der Ausnehmung der oberen Ringhälfte 204 eine Verdrehsicherung ergibt.

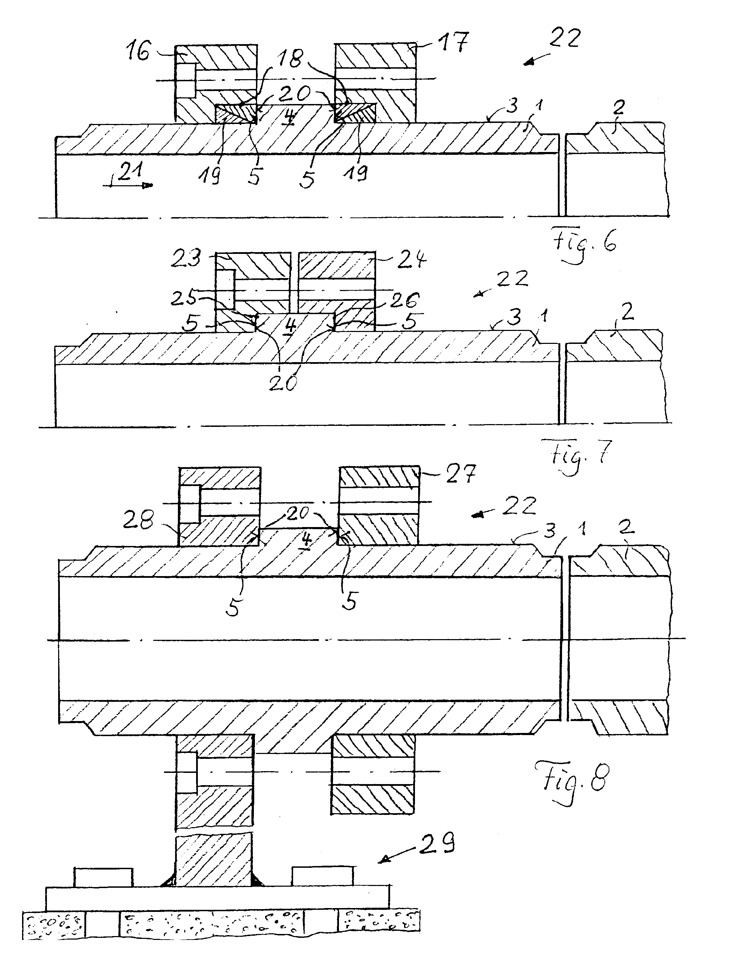

Nach der Montage umschließt der Druckring 203 das Zwischenrohrstück 1 im Bereich der Ringnut 7 mit definierter Kraft, so daß sich auch eine entsprechende Verdrehsicherung durch Reibschluß ergibt, die noch durch geeignete Mittel (z.B. Fig. 6) verstärkt werden kann.

Figur 5a und 5b zeigen weitere Formen für den Lagerbock 202, vor allem in Abhängigkeit von der gewünschten Bauhöhe. Die Erfindung läßt auch Druckringe aus mehr als zwei Teilen zu.

In den Ausführungsbeispielen gemäß Figur 6 bis 9, wo Baugruppen aus Festpunkten als Beispiele dargestellt sind, ist für das Zwischenrohrstück 1 die erste Ausführungsform gemäß Figur 1 mit einem vom Rohrmantel 3 vorstehenden Wulst 4 verwendet worden, ohne daß hieraus eine Beschränkung der Erfindung hervorgeht.

In dem Ausführungsbeispiel gemäß Figur 6 sind zwei Druckringe 16, 17 mit einander zugewandten Ausnehmungen 18 auf dem Rohrmantel 3 des Zwischenrohrstücks 1 angeordnet, wobei jeweils eine aus einem Keilringpaar bestehende Ringfeder 19 in der jeweiligen Ausnehmung 18 angeordnet ist. Durch die axiale Verspannung der Druckringe 16, 17 üben die Ringfedern 19 einen sehr hohen radialen Druck innen auf den Rohrmantel 3 und außen auf den Druckring 16 bzw. 17 aus, so daß die Druckringe 16,17 Torsionsbewegungen des Zwischenrohrstücks 1 verhindern.

10

An jeder Ringfeder 19 befindet sich stirnseitig eine Gegenfläche 20, die mit der entsprechenden Druckfläche 5 des Wulstes 4 zur Übertragung der axialen Schubkräfte zusammenwirkt. Natürlich trägt dieser Flächeneingriff auch zur Verhinderung von Torsionsrelativbewegungen bei.

Wenn beispielsweise infolge thermischer Einflüsse und dadurch bedingter Materialdehnungen axiale Schubkräfte auf die Rohrleitung wirken, wie durch den Pfeil 21 veranschaulicht ist, übt die rechts mit Bezug auf die Zeichnung gemäß Figur 6 an dem Wulst 4 gelegene kreisringförmige Druckfläche 5 einen entsprechend hohen Druck auf die mit ihr in Eingriff stehende Gegenfläche 20 der rechten Ringfeder 19 aus, der durch die Ringfeder 19 auf den rechten Druckring 17 übertragen und von hier aus in die nicht dargestellte Verankerung abgeleitet wird. Durch die Aufnahme der Schubkräfte in dem durch die Druckringe 16, 17 gebildeten Widerlager 22 wird das Zwischenrohrstück 1 festgehalten, so daß sich die Rohrleitung nicht verschieben kann. Falls Torsionskräfte auftreten, werden diese in gleicher Weise von dem Zwischenrohrstück 1 auf das Widerlager 22 übertragen und von dort in die Verankerung abgeleitet.

Es versteht sich von selbst, daß - je nach Torsionsbeanspruchung oder anderen Umständen - auch nur ein Druckring - rechts oder links von dem Wulst 4 - angeordnet sein kann. In diesem Fall ist dort, wo sich keine Ringfeder befindet, die Gegenfläche 20 unmittelbar an dem entsprechenden Druckring 16 oder 17 ausgebildet. Ebenso ist es möglich, andere Maßnahmen zur Verhinderung von Torsionsbewegungen des Zwischenrohrstücks 1 wie beispielsweise eine formschlüssige Festlegung mit Nut und Feder vorzusehen.

Es ist ferner darauf hinzuweisen, daß die dargestellten Druckringe 16, 17 ebenso wie die Druckringe oder Druckplatten der noch folgenden Ausführungsbeispiele sowohl einteilig mit entsprechenden Bohrungen zur Aufnahme des Zwischenrohrstücks 1 oder aber jeweils zweiteilig als Schellen ausgebildet sein können, nämlich mit einer Teilungsebene vorzugsweise senkrecht zur Zeichenebene.

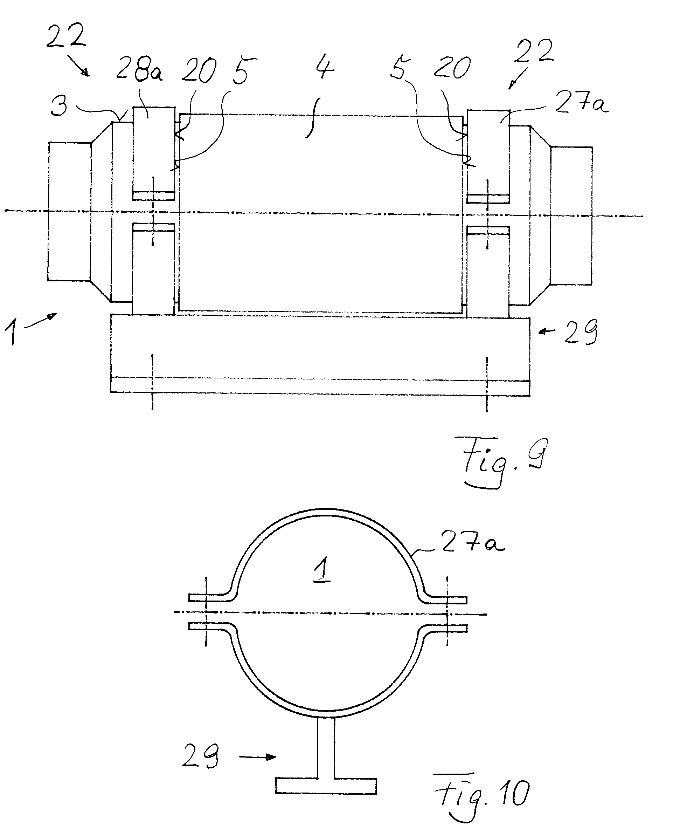

Bei dem Ausführungsbeispiel gemäß Figur 7 ergibt sich eine relativ schmale Bauform für das Widerlager 22 dadurch, daß die Druckringe 23, 24 innere kreisringförmige Ausnehmungen 25, 26 der in der Zeichnung dargestellten Art aufweisen, mit denen sie den Wulst 4 übergreifen. Auf jeden Fall sind die Gegenflächen 20 auf beiden Seiten des Wulstes 4 an den Druckringen 23, 24 jeweils in der inneren Ausnehmung 25 bzw. 26 ausgebildet. Zur Vermeidung einer Doppelpassung ist entweder die Mantelfläche des Wulstes 4 oder die neben dem Wulst 4 gelegene Rohrmantelfläche 3 zum Eingriff mit der entsprechenden kreisringförmigen Innenfläche der Druckringe 23, bzw. 24 bestimmt.

Im Beispiel gemäß Figur 8 ist dargestellt, daß der Wulst 4 zwischen einem Flansch 27 und einer Flanschplatte 28 zur Bildung des Widerlagers 22 eingespannt ist. An beiden Platten 27, 28 sind die Gegenflächen 20 unmittelbar an den inneren Stirnflächen ausgebildet. Die Ankerplatte 28 ist mit einer allgemein mit 29 bezeichneten Verankerung in der nur schematisch dargestellten Weise verbunden.In dem in Figur 9 und 10 dargestellten Beispiel streckt sich der Wulst 4 am Zwischenrohrstück 1 über einen erheblichen Abschnitt seiner Länge, so daß beiderseits des Wulstes 4 relativ schmale Abschnitte der Rohrmantelfläche 3 mit zwei in entsprechendem Abstand voneinander gelegenen Widerlagern 22 gebildet sind. Die Widerlager bestehen jeweils aus einer zweiteiligen Schelle 27a bzw. 28a, in der der entsprechende Abschnitt des Zwischenrohrstücks 1, wie aus der Zeichnung ersichtlich, eingespannt ist. Die Unterteile der Schellen 27a bzw. 28a gehen in eine gemeinsame Verankerung 29 über. Diese Aufteilung des Festpunktes auf zwei Widerlager 22 übernimmt das rechtsgelegene Widerlager 22 die nach rechts und das auf der linken Seite gelegene Widerlager 22 die nach links von der Rohrleitung bzw. dem Zwischenrohrstück 1 wirkenden Kräfte. Hierfür stehen bzw. gelangen die entsprechenden Druckflächen 5 des Wulstes 4 mit den zugeordneten Gegenflächen 20 der Schellen 27a bzw. 28a in Eingriff.

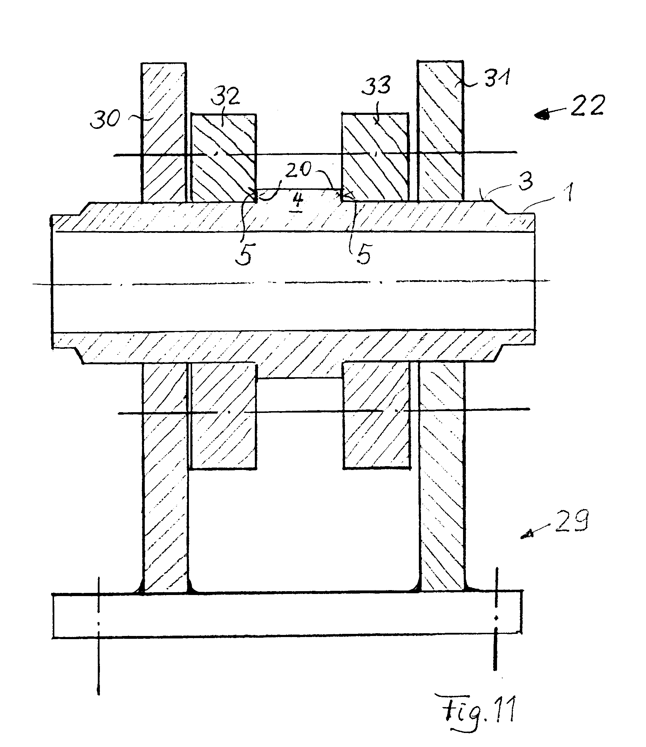

Eine besonders hochbelastbare und zu einem Käfig ausbaubare Festpunktausbildung ist in Figur 11 schematisch dargestellt. Zwei außen angeordnete Ankerplatten 30, 31 sind mit Druckplatten 32, 33 unter Einbeziehung des Wulstes 4 derart miteinander verspannt, daß auftretende Schubkräfte über das Zwischenrohrstück 1, nämlich über dessen Wulst 4, die Druckplatte 32 oder 33 sowie die Ankerplatte 30 bzw. 31 auf die Verankerung 29 übertragen werden. Dabei kann beispielsweise zwischen der Ankerplatte 30 und der Druckplatte 32 ein ausreichend weiter Abstand vorgesehen sein, so daß die Rohrleitung auf der rechten Seite gegen Bewegung nach rechts blockiert ist, während sie nach links ausweichen kann.

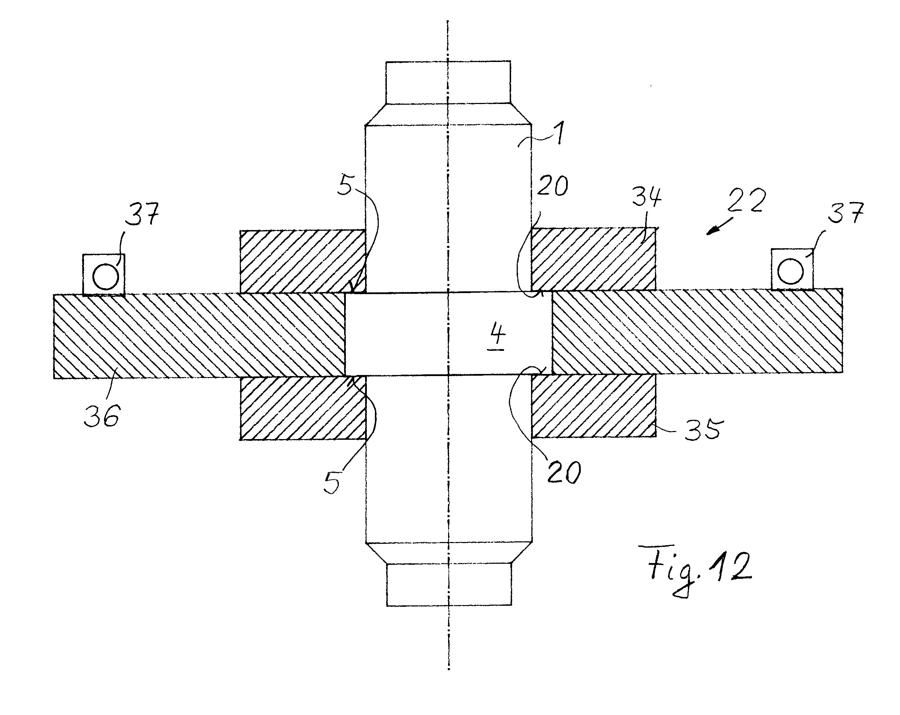

In dem Ausführungsbeispiel gemäß Figur 12 ist unter Verwendung eines Zwischenrohrstücks 1 von der Ausführungsform gemäß Figur 1 die Ausbildung eines Festpunktes für eine vertikale Rohrleitung dargestellt. Druckplatten 34, 35, die unter Einbeziehung des Wulstes 4 in axialer Richtung miteinander verspannt (nicht dargestellt) sind, bilden gleichzeitig die Halterung für eine Aufhängeplatte 36 mit Aufhängeösen 37, in dem die Aufhängeplatte 36, wie dargestellt, in der Ebene des Wulstes 4 angeordnet und mitverspannt ist. Zweckmäßig sind an der Aufhängeplatte 36 entsprechende Versteifungen vorgesehen, damit Durchbiegungen der Platte unter Belastung vermieden werden.

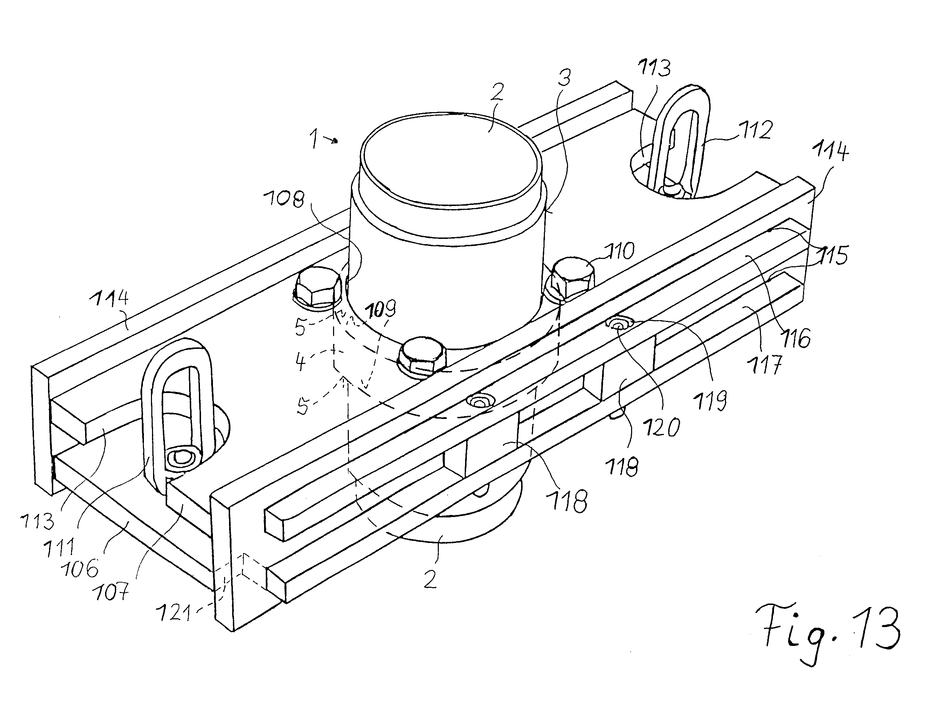

Bei dem in der Figur 13 dargestellten Beispiel einer vertikalen Rohrleitung ist der Wulst 4 des Zwischenrohrstücks 1 an beiden in Radialebenen gelegenen Stirnseiten mit den Druckflächen 5 versehen.

Das Zwischenrohrstück 1 ist mit zwei übereinanderliegenden Druckplatten 106, 107, wie in der Zeichnung dargestellt, fest verbunden. Hierfür weisen sowohl die untere Druckplatte 106 als auch die obere Druckplatte 107 eine entsprechend dem Durchmesser des Zwischenrohrstücks 1 kreisrunde Öffnung 108 auf. Die Druckplatten 106, 107 werden von oben bzw. von unten auf das Zwischenrohrstück 1 aufgesetzt, bis sie mit dem Wulst 4 in Eingriff kommen, so daß dessen Druckflächen 5 an entsprechenden Gegenflächen 109 am Rand der jeweiligen Öffnung 108 der unteren bzw. oberen Druckplatte 106 bzw. 107 zur Anlage kommen. In dieser gegenseitigen Zuordnung werden die Druckplatten 106, 107 mittels Schraubenbolzen 110, wie aus der Zeichnung ersichtlich, am Wulst 4 anliegend fest miteinander verspannt.

Die Druckplatten 106, 107 sind, wie aus der Zeichnung ebenfalls erkennbar ist, im wesentlichen rechteckförmig ausgebildet. Die untere Druckplatte 106 weist in der Nähe ihrer kurzen Rechteckseiten jeweils mittels Schraubenbolzen oder dergleichen befestigte ösenartige Aufhängeelemente 111, 112 auf, deren Abstand durch den Abstand der Aufhängungen, in der Regel Gewindestangen, vorgegeben ist. Für den Durchgang der Aufhängeelemente 111 weist die obere Druckplatte 107 stirnseitig jeweils eine Ausnehmung 113 auf.

Eine hochbelastbare, insbesondere biegesteife sowie berechenbare und wirtschaftliche herstellbare und im Bedarfsfall lösbare Konstruktion ergibt sich, wenn auf die Längsseiten der Druckplatten 106, 107 in der aus der Zeichnung ersichtlichen Weise rahmenförmige Versteifungswangen 114 von im wesentlichen gleicher Länge wie die Druckplatten 106, 107 aufgeschoben werden, und zwar bis zur Anlage an jeweils einem Anschlag 121 an den Ecken der Druckplatten 106, 107, der durch Bildung je eines Absatzes an den Ecken der Druckplatten 106, 107 hergestellt ist. Für einen gegenseitigen Formschluß der Druckplatten 106, 107 und der Versteifungswangen 114 weisen letztere Schlitze 115, wie aus der Zeichnung ersichtlich auf, die im Querschnitt, also in der Dicke sowie in der Länge, dem Querschnitt der durch die Versteifungswangen 114 hindurchgreifenden Plattenränder 116, 117 entsprechen. Wie auch die Zeichnung veranschaulicht, bilden so die Versteifungswangen 114 mit den Druckplatten 106, 107 nach einfacher Montage eine biegesteife Kastenkonstruktion.

Damit die Versteifungswangen 114 von den Druckplatten 106, 107 nicht abgleiten können und damit eine weitere Versteifung der Kastenkonstruktion erreicht wird, sind Riegelstücke 118 in der aus der Zeichnung ersichtlichen Lage zwischen den Rändern 116, 117 der Druckplatten 106, 107 eingesetzt, deren Höhe dem Abstand zwischen den Rändern 116, 117 entspricht. Die Befestigung der Riegelstücke 118 an den Druckplatten 106, 107 erfolgt mittels Innensechskantschrauben 120, die durch entsprechende Bohrungen 119 in vertikaler Richtung in die Platten und Riegelstücke 118 eingelassen, verspannt und gesichert werden. Vorteilhaft ist die Lage der Bohrungen 119 in einer Reihe mit den Bohrungen für die Schraubenbolzen 110.

Da die Rohrhalterung von ihrem Aufbau her optimale Voraussetzungen für eine hohe Biegesteifigkeit hat, reicht es aus, die Druckplatten 106, 107 aus einer normalen Stahlqualität wie St 37 mit einer Dicke von ca. 10 mm zu fertigen, um bei einem Ösenabstand von 500 mm eine axiale Schubkraftbelastung von 20 t aufzunehmen. Diese Angaben sind rein beispielhaft zu verstehen.

## Patentansprüche

1. System zur Festlegung von Rohrleitungen aus Stahl oder Edelstahl für insbesondere hochbelastbare Rohrleitungssysteme in Kraftwerken, chemischen Anlagen etc., dadurch **gekennzeichnet**, daß

a) zur Ausbildung eines Festpunktes ein Zwischenrohrstück (1) mit einem Widerlager (22) vorgesehen ist,

b) das Zwischenrohrstück (1) an seinen Enden zum Einfügen in die Rohrleitung ausgebildet z.B. abgestuft ist,

c) das Zwischenrohrstück (1) im Bereich seiner Mantelfläche (3) mindestens eine insbesondere axiale Schubkräfte übertragende Druckfläche (5) an einem einteilig mit dem Rohrkörper des Zwischenrohrstücks (1) ausgebildeten oder formschlüssig am Rohrkörper befestigten Wulst (4) oder an einer Ausnehmung (7) in dem genannten Rohrkörper aufweist,

d) das Widerlager (22) für ein Zusammenwirken mit dem Zwischenrohrstück (1) mit mindestens einer Gegenfläche (20) versehen ist, die für einen formschlüssigen Eingriff mit der Druckfläche (5) des Zwischenrohrstücks (1) ausgebildet ist und

e) das Widerlager (22) eine Verbindungsvorrichtung zum Befestigen desselben an einer Verankerung (29) aufweist.

2. System nach Anspruch 1, dadurch **gekennzeichnet**, daß die Druckfläche (5) in einer Radialebene angeordnet sowie ohne Unterbrechung kreisförmig umlaufend gestaltet oder aus mehreren Segmenten zusammengesetzt ist.

3. System nach Anspruch 1 oder 2, dadurch **gekennzeichnet**, daß die Druckfläche (5) an einem ringförmigen Wulst (4) des Zwischenstückes (1) gebildet ist.

4. System nach Anspruch 1 oder 2, dadurch **gekennzeichnet**, daß der formschlüssig auf dem Rohrkörper des Zwischenrohrstücks (1) befestigte Wulst (4) als vorspringendes Bauteil z.B. als Kranz aus auf dem Zwischenrohrstück (1) befestigbaren Anschlägen oder Steckteilen oder als Wulstring (8) an der Mantelfläche (3) des Zwischenrohrstücks (1) befestigt ist, beispielsweise durch Aufschrumpfen, Aufstauchen oder Anschrauben.

5. System nach Anspruch 4, dadurch **gekennzeichnet**, daß der Wulst (4) als Wulstring (8) auf einen Abschnitt des Zwischenrohrstücks (1) aufgeschrumpft ist, der einen geringfügig kleineren Außendurchmesser als die übrige Mantelfläche (3) des Zwischenrohrstücks (1) aufweist, wobei dieser Abschnitt - je nach Schubkraftbelastung - von einem Ende des Zwischenrohrstücks (1) ausgehend bis zu der Radialebene der zu bildenden Druckfläche (5) verläuft oder als flache, ringförmige Ausnehmung (9) mit zwei schmalen kreisringförmigen Druckflächen als Begrenzung an beliebiger Stelle zwischen den Enden des Zwischenstücks (1) ausgeführt ist.

6. System nach Anspruch 1 oder 2, dadurch **gekennzeichnet**, daß die Druckfläche (5) an einer ringförmigen Ausnehmung (7) ausgebildet ist.

7. System nach einem oder mehreren der vorhergehenden Ansprüche, **gekennzeichnet** durch eine Lage der Druckfläche(n) (5) im mittleren Bereich des Zwischenrohrstücks (1).

8. System nach einem oder mehreren der vorhergehenden Ansprüche, dadurch **gekennzeichnet**, daß mindestens ein offener und geteilter oder ein geschlossener Druckring (z.B. 16, 17) oder eine Druckplatte Bestandteil des Widerlagers (22) und Träger der Gegenfläche(n) (20) ist.

9. System nach einem oder mehreren der vorhergehenden Ansprüche, insbesondere Anspruch 8, **gekennzeichnet** durch einen aus einer oberen und einer unteren Ringhälfte (204, 205) gebildeten Druckring (203) des Widerlagers, der zum Eingriff mit der ringförmigen Ausnehmung (7) bzw. Ringnut des Zwischenrohrstücks (6) ausgebilde: und zur Aufnahme axialer Schubkräfte auf mindestens einer Seite mit einer Gegenfläche (219) zum Eingriff mit der entsprechenden ringförmigen Druckfläche (5) des Zwischenrohrstücks (1) versehen ist, sowie durch zwei im Abstand voneinander aufrecht auf einer Grundplatte (201) befestigbare Lagerböcke (202), insbesondere in platten- bzw. wangenförmiger Ausbildung, auf denen die untere Ringhälfte (205) in senkrechter Lage zu den Lagerböcken (202) sowie diese überbrükkend befestigbar ist.

10. System nach Anspruch 9, dadurch **gekennzeichnet**, daß die untere Ringhälfte (205) mit ihren Endabschnitten (210) formschlüssig in entsprechende Aufnahmen (208) im Oberteil (207) der Lagerböcke (202) einhängbar ist.

11. System nach Anspruch 9 oder 10, dadurch **gekennzeichnet**, daß die Aufnahmen (208) oben offen und mit senkrechten Stützflächen (209) versehen sind, zwischen denen der jeweilige Endabschnitt (210) der unteren Ringhälfte (205) einzufügen ist.

12. System nach Anspruch 9, 10 oder 11, dadurch **gekennzeichnet**, daß jeder Endabschnitt (210) der unteren Ringhälfte (205) eine nach unten offene Ausnehmung (211) zum formschlüssigen Übergreifen des betreffenden Lagerbocks (202) im Bereich der Aufnahme (208) zum Festlegen der unteren Ringhälfte (205) senkrecht zur Rohrleitungslängsachse aufweist.

13. System nach einem oder mehreren der Ansprüche 9-12, dadurch **gekennzeichnet**, daß sich ein mittels einer Schraubenmutter (214) spannbarer und sicherbarer Schraubenbolzen (213) senkrecht durch das Oberteil (207) jedes Lagerbocks (202) im Bereich der Ausnehmung (211) und der Aufnahme (208) sowie durch die Ringhälften (204, 205) zwecks gemeinsamer Befestigung der beiden Ringhälften (204, 205) und zum Einspannen des Zwischenstücks (1) zwischen diesen sowieso zur gleichzeitigen Befestigung des entsprechenden Endabschnittes (210) der unteren Ringhälfte (205) und des zugehörigen Lagerbocks (202) erstreckt.

14. System nach Anspruch 13, dadurch **gekennzeichnet**, daß sich im Abstand unterhalb der Aufnahme (8) in jedem Lagerbock (2) ein Fenster (15) zur Aufnahme der Schraubenmutter (14) sowie für die Zugänglichkeit des Schraubenbolzens (13) und der Schraubenmutter (14) findet.

15. System nach einem oder mehreren der Ansprüche 9-14, dadurch **gekennzeichnet**, daß die ringförmige Lagerbohrung im Druckring des Widerlagers zur Halterung des Zwischenrohrstücks (6) und insbesondere zur thermischen und/oder elektrischen Isolierung zwischen dem Zwischenrohrstück (6) und dem Druckring (3) mit kranzförmig angeordneten Stützelementen aus entsprechendem Material bzw. mit entsprechender Isolierschicht versehen besetzt ist.

16. System nach einem oder mehreren der Ansprüche 1-8, dadurch **gekennzeichnet**, daß im Falle der paarweisen Anordnung von Druckringen oder Druckplatten (z.B. 23, 24) an einem Wulst (4) der jeweils radial innen an die Druckfläche (5) anschließende und sich axial erstrekkende Abschnitt der Mantelfläche (3) einen Sitz für den oder die Druckringe (23, 24) des Wider lagers (22) bildet.

17. System nach einem oder mehreren der vorhergehenden Ansprüche, dadurch **gekennzeichnet,** daß zwischen dem Zwischenrohrstück (1) und dem Widerlager (22) eine Verdrehsicherung vorgesehen ist.

18. System nach Anspruch 17, dadurch **gekennzeichnet**, daß im Falle der Verwendung eines Wulstes (4) zur Befestigung des Zwischenrohrstücks insbesondere gegen Verdrehen mindestens einer der Druckring (16, 17) bei Druckringpaaren bzw. des Druckrings bei einem einzelnen Druckring ein Spannring bzw. eine Ringfeder (19) dient, die neben dem Wulst (4) in einer ringförmigen Ausnehmung (18) des betreffenden Druckrings (16, 17) angeordnet ist.

19. System nach einem oder mehreren der vorhergehenden Ansprüche, dadurch **gekennzeichnet**, daß im Falle der Verwendung eines Wulstes (4) zur Befestigung und Zentrierung die axial zusammenspannbaren Druckringe (23, 24) eine einen Teilabschnitt des Wulstes (4) übergreifende ringförmige Ausnehmung aufweisen.

20. System nach einem oder mehreren der Ansprüche 8,16-19, dadurch **gekennzeichnet**, daß einer der über oder neben dem Wulst (4) axial zusammenspannbaren Druckringe (27, 28) des Widerlagers (22) Bestandteil der Verankerung (29) ist.

21. System nach einem oder mehreren der Ansprüche 8,16-19 , dadurch **gekennzeichnet**, daß über dem Wulst (4) zwischen den axial miteinander verspannbaren Druckringen eine mit einer entsprechenden Öffnung versehene Ankerplatte befestigt ist (nicht dargestellt).

22. System nach einem oder mehreren der Ansprüche 1-8, 16-19, dadurch **gekennzeichnet**, daß zwei an den Wulstseiten anliegende Druckplatten (32, 33) zwischen zwei außenliegenden Ankerplatten (30, 31) axial einspannbar sind.

23. System nach einem oder mehreren der Ansprüche 1 bis 22,dadurch **gekennzeichnet**, daß zur vertikalen Festlegung einer Rohrleitung eine Aufhängeplatte (36) zwischen den am Wulst (4) des Zwischenrohrstücks (1) axial miteinander zu verspannenden Druckringen oder Druckplatten (34, 35) befestigt ist (Fig. 12).

24. System nach einem oder mehreren der vorhergehenden Ansprüche, insbesondere zur Festlegung eine vertikalen Rohrleitung, **gekennzeichnet** durch mindestens eine Druckplatte (106, 107) als Widerlager mit einer Öffnung (108) als Durchgang für das Zwischenrohrstück (1) sowie mit einem ganz oder teilweise als Gegenfläche (109) ausgebildeten Rand der Öffnung (108) für den Eingriff mit einer entsprechenden Druckfläche (5) an dem Wulst (4) des Zwischenrohrstücks (1), für vertikale Rohrleitungen durch Aufhängeelemente (37, 111), die an gegenüberliegenden Seiten, insbesondere der unteren der Druckplatte(n) (36;106, 107) befestigbar sind und unabhängig von der Rohrleitungsrichtung durch mindestens eine Versteifungswange (114), die für eine formschlüssige Befestigung an der Druckplatte (106) bzw. an miteinander zu verspannenden Druckplatten (106, 107) ausgebildet ist.

25. System nach Anspruch 24, dadurch **gekennzeichnet**, daß Versteifungswangen (114) einander auf verschiedenen Seiten des Zwischenrohrstücks (1), insbesondere an den Längsseiten von rechteckigen Druckplatten (106, 107) sowie einander gegenüberliegend und im wesentlichen parallel zueinander anzuordnen sind.

26. System nach Anspruch 24 oder 25, dadurch **gekennzeichnet**, daß die Versteifungswangen (114) für die formschlüssige Verbindung mit der Druckplatte (107) bzw. den Druckplatten (106, 107) derartige Schlitze (115) aufweisen, daß die Versteifungswangen (114) von den Seiten her auf die Druckplatte(n) (106, 107) aufschiebbar sind, zweckmäßig bis zu einem Anschlag (21).

27. System nach einem oder mehreren der Ansprüche 24-26, **gekennzeichnet** durch mindestens ein befestigbares Riegelstück (118) für die Sicherung des formschlüssigen Eingriffs zwischen der Druckplatte bzw. den Druckplatten (106, 107) und den Versteifungswangen (114), wobei die Riegelstücke (118) im Falle von zwei Druckplatten (106,107) als Füllstücke zwischen und an diesen randseitig befestigbar sind.

28. System nach einem oder mehreren der Ansprüche 23-27, **gekennzeichnet** durch eine ringsumlaufende Nut oder einen Absatz am Mantel (3) des Zwischenrohrstücks (1) für die Ausbildung der Druckfläche(n) (5) und durch eine entsprechende Ausbildung von Gegenflächen (109) an der bzw. den Druckplatte(n) (36; 106, 107).

## Claims

1. System for fixing pipelines made from steel or high quality steel for in particular heavy duty pipeline systems in power stations, chemical plants, etc., characterized in that
   a) an intermediate pipe section (1) is provided with an abutment (22) for forming a fixed point,
   b) the ends of the intermediate pipe section (1) are constructed, e.g. stepped for insertion in the pipeline,
   c) in the vicinity of its circumferential surface (3) the intermediate pipe section (1) has at least one in particular axial thrust force-transferring pressure surface (5) on a bead (4) constructed in one piece with the pipe body of the intermediate pipe section (1) or fixed in interlocking manner on the pipe body, or on a recess (7) in the said pipe body,
   d) the abutment (22) for cooperating with the intermediate pipe section (1) is provided with at least one mating surface (20), which is constructed for interlocking engagement with the pressure surface (5) of the intermediate pipe section (1) and
   e) the abutment (22) has a connecting device for fixing the same to an anchor tie (29).

14

2. System according to claim 1, characterized in that the pressure surface (5) is located in a radial plane and passes round in circular manner without interruption or is formed from several segments.

3. System according to claims 1 or 2, characterized in that the pressure surface (5) is formed on a ring-like bead (4) of the intermediate pipe section (1).

4. System according to claims 1 or 2, characterized in that the bead (4) fixed in interlocking manner to the pipe body of the intermediate pipe section (1) is fixed as a projecting component, e.g. as a ring of plug-in parts or stops fixable to the intermediate pipe section (1) or as a beaded ring (8) to the circumferential surface (3) of the intermediate pipe section (1), e.g. by compressing, shrinking or screwing on.

5. System according to claim 4, characterized in that the bead (4) is shrunk as a beaded ring (8) onto a portion of the intermediate pipe section (1), which has a slightly smaller external diameter than the remaining circumferential surface (3) of the intermediate pipe section (1) and in which, as a function of the thrust force load, said portion runs from one end of the intermediate pipe section (1) to the radial plane of the pressure surface (5) to be formed or is constructed as a flat, circular recess (9) with two narrow circular pressure surfaces as a boundary on a random point between the ends of the section (1).

6. System according to claims 1 or 2, characterized in that the pressure surface (5) is constructed on a circular recess (7).

7. System according to one or more of the preceding claims, characterized by a position of the pressure surface or surfaces (5) in the central area of the intermediate pipe section (1).

8. System according to one or more of the preceding claims, characterized in that at least one open and split or a closed thrust ring (e.g. 16,17) or a pressure plate is a component of the abutment (22) and the support for the mating surface or surfaces (20).

9. System according to one or more of the preceding claims, particularly according to claim 8, characterized by an abutment thrust ring (203) formed from an upper and a lower ring half (204,205) and which is constructed for engaging with the circular recess (7) or circular groove of the intermediate pipe section (6) and for absorbing axial thrust forces is provided on at least one side with a mating surface (219) for engaging with the corresponding circular pressure surface (5) of the intermediate pipe section (1), as well as by two spaced, upright bearing blocks (202) fixable to a base plate (201) and in particular having a plate or web-like construction, on which can be fixed the lower ring half (205) in a vertical position with respect to the bearing blocks (202) and bridging the latter.

10. System according to claim 9, characterized in that the lower ring half (205) can be hung in locking manner by its end portions (210) in corresponding receptacles (208) in the upper part (207) of the bearing blocks (202).

11. System according to claims 9 or 10, characterized in that the receptacles (208) are open at the top and are provided with vertical support faces (209) between which is to be inserted the end portion (210) of the lower ring half (205).

12. System according to claims 9,10 or 11, characterized in that each end portion (210) of the lower ring half (205) has a downwardly open recess (211) for interlocking engaging over of the particular bearing block (202) in the vicinity of the receptacle (208) for securing the lower ring half (205) perpendicular to the pipeline longitudinal axis.

13. System according to one or more of the claims 9 to 12, characterized in that a bolt (213) fixable and securable by means of a lock nut (214) extends perpendicularly through the upper part (207) of each bearing block (202) in the vicinity of the recess (211) and the receptacle (208), as well as through the ring halves (204, 205) for the joint fixing of the two ring halves (204,205) and for securing the intermediate section (1) between the same and for simultaneously fixing the corresponding end portion (210) of the lower ring half (205) and the associated bearing block (202).

14. System according to claim 13, characterized in that in spaced manner below the receptacle (8) in each bearing block (2) is provided a window (15) for receiving the lock nut (14) and for the accessibility of the bolt (13) and the lock nut (14).

15. System according to one or more of the claims 9 to 14, characterized in that the circular bearing bore in the thrust ring of the abutment for retaining the intermediate pipe section (6) and in particular for the thermal and/or electrical insulation between said section (6) and the thrust ring (3) is provided with circularly arranged support elements made from a corresponding material or with a corresponding insulating layer.

16. System according to one or more of the claims 1 to 8, characterized in that in the case of the pairwise arrangement of the thrust rings or pressure plates (e.g. 23,24) on a bead (4) of the axially extending portion of the circumferential surface (3) connected radially inwards to the pressure surface (5), forms a seat for the thrust ring or rings (23,24) of the abutment (22).

17. System according to one or more of the preceding claims, characterized in that a twisting preventing means is provided between the intermediate pipe section (1) and the abutment (22).

15

18. System according to claim 17, characterized in that in the case of using a bead (4) for fixing the intermediate pipe section, particularly against twisting, at least one of the thrust rings (16,17) of the thrust ring pairs or the single thrust ring when there is only one serves as a spring ring or circlip (19), which is positioned alongside the bead (4) in a circular recess (18) of the particular thrust ring (16,17).

19. System according to one or more of the preceding claims, characterized in that in the case of using a bead (4) for fixing and centering the axially fixable together thrust rings (23,24) one has a circular recess engaging over a portion of the bead (4).

20. System according to one or more of the claims 8 and 16 to 19, characterized in that one of the axially fixable together thrust rings (27,28) of the abutment (22) above or alongside the bead (4) is a component of the anchor tie (29).

21. System according to one or more of the claims 8 and 16 to 19, characterized in that an anchor plate (not shown) provided with a corresponding opening is fixed above the bead (4) between the axially fixable together thrust rings.

22. System according to one or more of the claims 1 to 8 and 16 to 19, characterized in that two pressure plates (32,33) engaging on the bead sides can be axially fixed between two outer anchor plates (30,31).

23. System according to one or more of the claims 1 to 22, characterized in that for the vertical fixing of a pipeline a suspension plate (30) is fixed between the thrust rings or pressure plates (34,35) to be axially fixed together on the bead (4) of the intermediate pipe section (1) (fig. 12).

24. System according to one or more of the preceding claims, particularly for fixing a vertical pipeline, characterized by at least one pressure plate (106,107) as an abutment and having an opening (108) as a passage for the intermediate pipe section (1) and with a rim of the opening (108) constructed wholly or partly as a mating surface (109) for engaging with a corresponding pressure surface (5) on the bead (4) of the intermediate pipe section (1), for vertical pipelines by suspension elements (37,111), which can be fixed to opposite sides, particularly of the lower of the pressure plates (36,106,107) and independently of the pipeline direction is constructed by at least one stiffening web (114) for interlocking fixing to the pressure plate (106) or to pressure plates (106,107) which are to be fixed together.

25. System according to claim 24, characterized in that the stiffening webs (114) are to be positioned facing and substantially parallel to one another on different sides of the intermediate pipe section (1), particularly on the longitudinal sides of rectangular pressure plates (106,107).

26. System according to claims 24 or 25, characterized in that the stiffening webs (114) for the interlocking connection with the pressure plate (107) or the pressure plates (106,107) have slots (115) such that the stiffening webs (114) can be engaged from the sides on the pressure plate or plates (106,107) appropriately up to a stop member (21).

27. System according to one or more of the claims 24 to 26, characterized by at least one fixable bolt member (118) for securing the interlocking engagement between the pressure plate or plates (106, 107) and the stiffening webs (114), and in the case of two pressure plates (106,107) the bolt members (118) are marginally fixable thereto and between the same as fillers.

28. System according to one or more of the claims 23 to 27, characterized by an all round groove or a step on the jacket (3) of the intermediate pipe section (1) for the formation of the pressure surface or surfaces (5) and by a corresponding construction of the mating surface or surfaces (109) on the pressure plate or plates (36,106,107).

## Revendications

1. Système de fixation pour des conduites en acier ou en acier inoxydable pour des systèmes de tuyauteries qui peuvent être particulièrement fortement sollicités dans des centrales de force motrice, des installations chimiques etc., **caractérisé en ce**

a) qu'il est prévu une pièce de tuyau intermédiaire (1) avec une butée (22) pour former un point fixe,

b) que la pièce de tuyau intermédiaire (1) est configurée en étant, par exemple, dégradée à ses extrémités pour l'insérer dans la tuyauterie,

c) que la pièce de tuyau intermédiaire (1) présente, dans la zone de sa surface d'enveloppe (3), au moins une surface de pression (5), qui transmet des efforts de poussée en particulier dans le sens axial, sur un bourrelet (4) configuré en une pièce avec le corps de tuyau de la pièce de tuyau intermédiaire (1) ou fixé sur le corps de tuyau de manière clabotée ou sur un creux (7) dans ledit corps de tuyau,

d) que la butée (22) est pourvue d'au moins une surface antagoniste (20) pour une coopération avec la pièce de tuyau intermédiaire (1), surface antagoniste qui est configurée pour un engrènement claboté avec la surface de pression (5) de la pièce de tuyau intermédiaire (1) et

e) que la butée (22) présente un dispositif de jonction pour fixer celle-ci à un ancrage (29).

2. Système selon la revendication 1, **caractérisé en ce** que la surface de pression (5) est placée dans un plan radial et est configurée de forme périphérique circulaire sans interruption ou qu'elle se compose de plusieurs segments.

3. Système selon la revendication 1 ou 2, **caractérisé en ce** que la surface de pression (5) est formée sur un bourrelet (4) annulaire de la pièce de tuyau intermédiaire (1).

4. Système selon la revendication 1 ou 2, **caractérisé en ce** que le bourrelet (4) fixé de manière clabotée sur le corps de tuyau de la pièce de tuyau intermédiaire (1) est fixé comme élément en saillie, par exemple comme couronne se composant de butées ou de pièces embrochables pouvant être fixées sur la pièce de tuyau intermédiaire (1) ou comme anneau en bourrelet (8) sur la surface d'enveloppe (3) de la pièce de tuyau intermédiaire (1), par exemple par frettage, refoulement ou vissage.

5. Système selon la revendication 4, **caractérisé en ce** que le bourrelet (4) est fretté comme anneau en bourrelet (8) sur une section de la pièce de tuyau intermédiaire (1) qui présente un diamètre extérieur légèrement plus faible que le reste de la surface d'enveloppe (3) de la pièce de tuyau intermédiaire (1), cette section allant, selon la sollicitation par la force de poussée - en partant d'une extrémité de la pièce de tuyau intermédiaire (1) jusqu'au plan radial de la surface de pression (5) à former ou étant réalisée comme creux annulaire plat (9) avec deux surfaces de pression étroites et circulaires comme délimitation à nimporte quel endroit entre les extrémités de la pièce intermédiaire (1).

6. Système selon la revendication 1 ou 2, **caractérisé en ce** que la surface de pression (5) est formée sur un creux annulaire (7).

7. Système selon l'une ou plusieurs des revendications précédentes, **caractérisé par** une couche de surface(s) de pression (5) dans la zone centrale de la pièce intermédiaire de tuyau (1).

8. Système selon l'une ou plusieurs des revendications précédentes, **caractérisé en ce** qu'au moins un anneau de pression ouvert et divisé ou un anneau de pression fermé (par exemple 16, 17) ou une plaque de pression est partie constituante de la butée (22) et support de la (des) surface(s) antagoniste(s) (20).

9. Système selon l'une ou plusieurs des revendications précédentes, en particulier selon la revendication 8, **caractérisé par** un anneau de pression (203) de la butée, formé par une moitié d'anneau supérieure et une moitié d'anneau inférieure (204, 205), qui est configuré pour l'engrènement avec le creux annulaire (7) ou la rainure annulaire de la pièce de tuyau intermédiaire (6) et qui est pourvu, pour capter les forces de poussée axiales, d'une surface antagoniste (219) sur au moins un côté pour l'engrènement avec la surface de pression (5) annulaire correspondante de la pièce de tuyau intermédiaire (1) ainsi que par deux paliers (202) qui peuvent être fixés debout sur une plaque de base (201) en étant écartés l'un de l'autre, en particulier configurés en forme de plaques ou de joues sur lesquels la moitié inférieure d'anneau (205) peut être fixée dans le sens vertical par rapport aux paliers (202) et en les surmontant.

10. Système selon la revendication 9. **caractérisé en ce** que la moitié d'anneau inférieure (205) peut être suspendue avec ses portions d'extrémité (210) de manière clabotée dans des logements correspondants (208) dans la partie supérieure (207) des paliers (202).

11. Système selon la revendication 9 ou 10, **caractérisé en ce** que les logements (208) sont ouverts en haut et sont pourvus de surfaces d'appui verticales (209) entre lesquelles la portion d'extrémité respective (210) de la moitié d'anneau inférieure (205) doit être insérée.

12. Système selon la revendication 9, 10 ou 11, **caractérisé en ce** que chaque portion d'extrémité (210) de la moitié d'anneau inférieure (205) présente un creux (211) ouvert vers le bas pour la prise clabotée du palier concerné (202) dans la zone du logement (208) pour fixer la moitié d'anneau inférieure (205) verticalement par rapport à l'axe longitudinal de la tuyauterie.

13. Système selon l'une ou plusieurs des revendications 9-12, **caractérisé en ce** qu'un boulon fileté (213) qui peut être serré et bloqué au moyen d'un écrou (214) s'étend à travers la partie supérieure (207) de chaque palier (202) dans la zone du creux (211) et du logement (208) ainsi qu'à travers les moitiés d'anneau (204, 205) pour la fixation commune des deux moitiés d'anneau (204, 205) et pour serrer la pièce intermédiaire (1) entre celles-ci ainsi que pour la fixation simultanée de la portion d'extrémité correspondante (210) de la moitié d'anneau inférieure (205) et du palier correspondant (202).

14. Système selon la revendication 13, **caractérisé en ce** qu'une fenêtre (15) se trouve à un certain écart au-dessous du logement (8) dans chaque palier (2) pour loger l'écrou (14) ainsi que pour l'accessibilité du boulon fileté (13) et de l'écrou (14).

15. Système selon l'une ou plusieurs des revendications 9-14, **caractérisé en ce** que la forure du palier annulaire dans l'anneau de pression de la butée pour le support de la pièce intermédiaire de tuyau (6) et en particulier pour l'isolation thermique et/ou électrique entre la pièce de tuyau intermédiaire (6) et l'anneau de pression (3) est garnie d'éléments de support placés en forme de couronne en matière correspondante ou est pourvue d'une couche isolante correspondante.

16. Système selon l'une ou plusieurs des revendications 1-8, **caractérisé en ce** que, dans le cas de la disposition d'anneaux de pression ou de plaques de pression (par ex. 23, 24) par paires sur un bourrelet (4), la portion de la surface d'enveloppe (3) qui se rattache respectivement à la surface de pression (5) dans le sens radial à l'intérieur et qui s'étend dans le sens axial forme un logement pour l'anneau de pression ou les anneaux de pression (23, 24) de la butée (22).

17. Système selon l'une ou plusieurs des revendications précédentes, **caractérisé en ce** qu'une sécurité contre la torsion est prévue entre la pièce de tuyau intermédiaire (1) et la butée (22).

18. Système selon la revendication 17, **caractérisé en ce** que, dans le cas de l'utilisation d'un bourrelet (4) pour la fixation de la pièce intermédiaire de tuyau en particulier contre la torsion, au moins l'un des anneaux de pression (16, 17) pour des paires d'anneaux de pression ou de l'anneau de pression en cas d'un seul anneau de pression présente un anneau de serrage ou un anneau-ressort (19) qui est placé à côté du bourrelet (4) dans un creux annulaire (18) de l'anneau de pression concerné (16, 17).

19. Système selon l'une ou plusieurs des revendications précédentes, **caractérisé en ce** que, dans le cas de l'utilisation d'un bourrelet (4) pour la fixation et le centrage, les anneaux de pression (23, 24) qui peuvent être tendus ensemble axialement présentent un creux annulaire qui recouvre une section partielle du bourrelet (4).

20. Système selon l'une ou plusieurs des revendications 8, 16-19, **caractérisé en ce** qu'un des anneaux de pression (27, 28) de la butée (22) qui peuvent être tendus ensemble axialement au-dessus ou à côté du bourrelet (4) est partie constituante de l'ancrage (29).

21. Système selon l'une ou plusieurs des revendications 8, 16-19, **caractérisé en ce** qu'une plaque d'ancrage pourvue d'une ouverture correspondante est fixée au-dessus du bourrelet (4) entre les anneaux de pression qui peuvent être tendus ensemble axialement (non représentée).

22. Système selon l'une ou plusieurs des revendications 1-8, 16-19, **caractérisé en ce** que deux plaques de pression (32, 33) appliquées sur les côtés du bourrelet peuvent être serrées axialement entre deux plaques d'ancrage (30, 31) situées à l'extérieur.

23. Système selon l'une ou plusieurs des revendications 1 à 22, **caractérisé en ce** qu'une plaque de suspension (30) est fixée, pour la fixation verticale d'une tuyauterie, entre les anneaux de pression ou les plaques de pression (34, 35) qui doivent être tendues ensemble axialement sur le bourrelet (4) de la pièce intermédiaire de tuyau (fig. 12).

24. Système selon l'une ou plusieurs des revendications précédentes, en particulier pour la fixation d'une tuyauterie verticale, **caractérisé par** au moins une plaque de pression (106, 107) comme butée avec une ouverture (108) comme passage pour la pièce de tuyau intermédiaire (1) ainsi qu'avec un bord de l'ouverture (108) configuré entièrement ou partiellement comme surface antagoniste (109) pour l'engrènement avec une surface de pression (5) correspondante sur le bourrelet (4) de la pièce intermédiaire de tuyau (1), pour des tuyauteries verticales par éléments de suspension (37, 111) qui peuvent être fixés sur des faces opposées, en particulier la face inférieure de la (des) plaque(s) de pression (36 ; 106, 107) et indépendamment du sens de la tuyauterie, par au moins une joue de renforcement (114) qui est configurée pour une fixation clabotée sur la plaque de pression (106) ou sur des plaques de pression qui doivent être tendues ensemble (106, 107).

25. Système selon la revendication 24, **caractérisé en ce** que des joues de renforcement (114) doivent être placées sur différentes faces de la pièce intermédiaire de tuyau (1), en particulier sur les faces longitudinales de plaques de pression rectangulaires (106, 107) en étant opposées l'une à l'autre ainsi que substantiellement parallèles l'une à l'autre.

26. Système selon la revendication 24 ou 25, **caractérisé en ce** que les joues de renforcement (114) pour la jonction clabotée avec la plaque de pression (107) ou avec les plaques de pression (106, 107) présentent des fentes (115) telles que les joues de renforcement (114) peuvent être enfilées sur la (les) plaque(s) de pression (106, 107) par les côtés, de manière appropriée jusqu'à une butée (21).

27. Système selon l'une ou plusieurs des revendications 24-26, **caractérisé par** au moins un verrou (118) qui peut être fixé pour le blocage de l'engrènement claboté entre la plaque de pression ou les plaques de pression (106, 107) et les joues de renforcement (114), les verrous (118) pouvant être fixés sur les bords, dans le cas de deux plaques de pression (106, 107), comme pièces intercalaires entre celles-ci et sur celles-ci.

28. Système selon l'une ou plusieurs des revendications 23-27, **caractérisé par** une rainure périphérique ou une saillie sur l'enveloppe (3) de la pièce intermédiaire de tuyau (1) pour la configuration de la (des) surfaces de pression (5) et par une configuration correspondante de surfaces antagonistes (109) sur la ou les plaque(s) de pression (36 ; 106, 107).

Fig. 1

Fig. 2

Fig. 3

Fig. 4

Fig. 5

FIG. 5a

FIG.5b

FIG. 5c

FIG.5d

Fig. 6

Fig. 7

Fig. 8

Fig. 9

Fig. 10

Fig. 11

Fig. 12

Fig. 13